(19) Europäisches Patentamt
European Patent Office
Office européen des brevets

(11) **EP 4 516 654 A1**

(12) **EUROPEAN PATENT APPLICATION**
published in accordance with Art. 153(4) EPC

(43) Date of publication:
**05.03.2025 Bulletin 2025/10**

(21) Application number: **23796345.9**

(22) Date of filing: **24.04.2023**

(51) International Patent Classification (IPC):
**B62M 9/08** (2006.01)     **F16G 5/06** (2006.01)
**F16H 9/16** (2006.01)

(52) Cooperative Patent Classification (CPC):
**B62M 9/08; F16G 5/00; F16G 5/06; F16H 9/04;
F16H 9/16**

(86) International application number:
**PCT/JP2023/016186**

(87) International publication number:
**WO 2023/210605 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 JP 2022073123
13.04.2023 JP 2023065626**

(71) Applicant: **Mitsuboshi Belting Ltd.
Kobe-shi, Hyogo 653-0024 (JP)**

(72) Inventors:
• **YANAGIHARA Kazuhito
Kobe-shi, Hyogo 653-0024 (JP)**
• **TAKANO Keiji
Kobe-shi, Hyogo 653-0024 (JP)**

(74) Representative: **Hoffmann Eitle
Patent- und Rechtsanwälte PartmbB
Arabellastraße 30
81925 München (DE)**

(54) **BELT MECHANISM PROVIDED IN BICYCLE CONTINUOUSLY VARIABLE TRANSMISSION**

(57) The present invention relates to a belt mechanism provided in a bicycle continuously variable transmission including a drive pulley and a driven pulley each configured from a pair of sheaves that can be moved toward and away from one another in the direction of an axis of rotation, and a V-belt wound between the drive pulley and the driven pulley, wherein an LT coefficient of the V-belt with respect to the drive pulley lies in a range of 8 to 12 in a usage condition in which torque is maximized with the continuously variable transmission shifted to a lowest speed side, and the V-belt has a belt transverse stiffness in a range of 1500 to 2500 N/mm in a ride-out change measurement test.

FIG. 2

EP 4 516 654 A1

**Description**

TECHNICAL FIELD

The present invention relates to a belt system provided in a bicycle continuously variable transmission.

BACKGROUND ART

A V-belt for transmitting power by frictional power-transmission includes a raw-edge type (raw-edge V-belt) in which a frictional power-transmission surface (V-shaped side surface) is an exposed rubber layer, and a wrapped type (wrapped V-belt) in which the frictional power-transmission surface is covered with a cover fabric, and is selectively used according to applications depending on a difference in surface properties (friction coefficient between a rubber layer and the cover fabric) of the frictional power-transmission surface.

Examples of the raw-edge type belt include a raw-edge V-belt in which cogs are not provided, a raw-edge cogged V-belt in which cogs are provided only on a lower surface (inner peripheral surface) of the belt to improve bendability, and a raw-edge cogged V-belt (raw-edge double cogged V-belt) in which cogs are provided on both a lower surface (inner peripheral surface) and an upper surface (outer peripheral surface) of the belt to improve bendability.

The raw-edge V-belt and the raw-edge cogged V-belt are mainly used for driving a general industrial machine and an agricultural machine, for driving auxiliary machines in an engine of an automobile, and the like. Further, as another application, there is a raw-edge cogged V-belt called a variable speed belt used in a belt-type continuously variable transmission (CVT) for a motorcycle, a snowmobile, a four-wheel buggy, and the like. Hereinafter, the raw-edge cogged V-belt is referred to as a V-belt (or a variable speed belt).

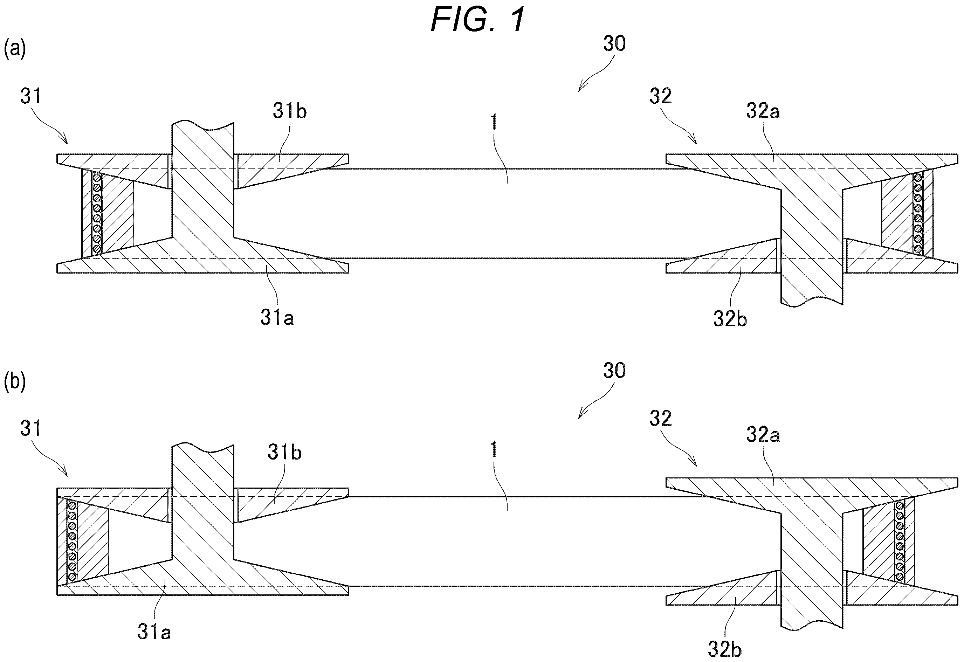

As illustrated in FIG. 1, a belt system 30 provided in the belt-type continuously variable transmission is a system that winds a V-belt 1 around a driving pulley 31 and a driven pulley 32 to change a gear ratio continuously. Each of the pulleys 31 and 32 includes fixed sheaves 31a and 32a which are restricted or fixed from moving in an axial direction, and movable sheaves 31b and 32b which are movable in the axial direction, and inner peripheral walls of the fixed sheaves 31a, 32a and inner peripheral walls of the movable sheaves 31b, 32b form V-groove-shaped inclined opposing surfaces. The driving pulley 31 and the driven pulley 32 have a structure in which widths of the V-grooves of the driving pulley 31 and the driven pulley 32 formed by the fixed sheaves 31a and 32a and the movable sheaves 31b and 32b can be continuously changed. Both end surfaces of the V-belt 1 in a width direction are formed by tapered surfaces whose inclination matches the V-groove-shaped inclined opposing surfaces of the driving pulley 31 and the driven pulley 32, and are fitted into any position in an up-down direction on the opposing surfaces of the V-grooves according to the changed widths of the V-grooves. For example, when a state illustrated in (a) of FIG. 1 is changed to a state illustrated in (b) of FIG. 1 by decreasing the width of the V-groove of the driving pulley 31 and increasing the width of the V-groove of the driven pulley 32, the V-belt 1 moves above the V-groove on a driving pulley 31 side and below the V-groove on a driven pulley 32 side, winding diameters around the driving pulley 31 and the driven pulley 32 are continuously changed, and a gear ratio can be continuously changed.

A number of techniques relating to a belt system (particularly, a V-belt) mounted on a belt-type continuously variable transmission for a motorcycle (scooter) have been disclosed so far, and there are few cases in which techniques relating to a belt system mounted on a belt-type continuously variable transmission for a bicycle (including a bicycle with an auxiliary power source such as an electric motor) have been proposed so far (for example, Patent Literatures 1 and 2).

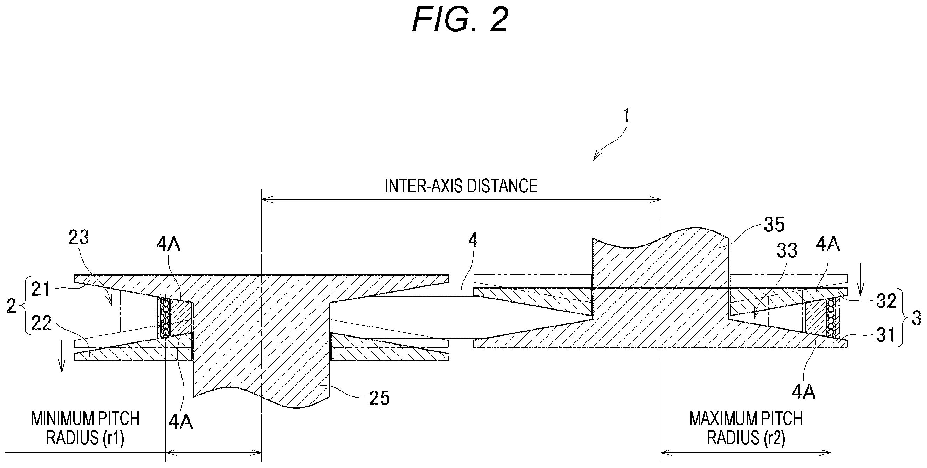

For example, a belt system (for example, FIG. 2A) provided in a belt-type continuously variable transmission for a bicycle disclosed in Patent Literature 2 includes, although details are omitted, a driving pulley (input unit 1100) coupled to a rotation shaft of a crank having a pedal at a tip end portion thereof via a gear system (input amplification unit 7510, see FIG. 13B) or the like, a driven pulley (output unit 1300) coupled to a drive shaft of a rear wheel via a chain along with a gear system (output amplification unit 7400, see FIG. 13B), and a V-belt (transmission unit 1200) wound around the driving pulley and the driven pulley. The gear system attached to the belt system maintains the driving pulley and the driven pulley in a more accelerated state in order to facilitate stable operation of the continuously variable transmission by the belt system, and thus there is no need for the belt-type continuously variable transmission for a motorcycle (scooter) in which a rotation speed of a crankshaft is maintained remarkably higher than that in the case of a bicycle (for example, about 60 rpm to 80 rpm), and it can be said that a configuration of the gear system is specialized for the use of the bicycle.

As described above, the belt-type continuously variable transmission for a bicycle has recently been proposed as a product having a function of capable of efficiently converting a pedal force of a pedal to a thrust of the bicycle (for example, a function of maintaining a rotation speed of the pedal as constant as possible regardless of a speed of the bicycle) by providing a belt system (a configuration of the driving pulley, the driven pulley, and the V-belt) and the other system attached thereto (an acceleration gear system and the like) described in Patent Literature 2. However, in patent literatures such as Patent Literatures 1 and 2, only the continuously variable transmission for a bicycle using a belt system (a driving pulley, a driven pulley, and a V-belt) is described, and a detailed design technique relating to a belt system (particularly, a V-belt) suitable for the transmission is not studied.

CITATION LIST

PATENT LITERATURE

Patent Literature 1: JPH05-278668A
Patent Literature 2: JP2019-503923A

SUMMARY OF INVENTION

TECHNICAL PROBLEM

Therefore, regarding the belt system (particularly, a V-belt) provided in a continuously variable transmission for a bicycle, a detailed design of the belt system that can be applied to usage conditions serving as a prerequisite has been studied, and the following problems occur.

(Usage conditions serving as prerequisite when continuously variable transmission is applied to bicycle)

· Condition 1

Compared with a small scooter (exhaust amount: 50 cc to 125 cc), a large restriction on space and weight for mounting a belt-type continuously variable transmission on a bicycle, and thus it is required that the transmission is sufficiently compact (small, lightweight) as described in, for example, Patent Literature 2 (reference numeral 8000 in FIG. 15) in addition to ensuring the above-described function. Therefore, each configuration of the belt system provided in the transmission is also limited as follows.

(1) A pulley (minimum pitch diameter) is reduced in diameter
For example, a minimum pitch diameter in the case of the small scooter is about 40 mm to 55 mm, whereas the minimum pitch diameter is limited to a range close to the lower limit of about 40 mm to 45 mm.
(2) In order to wind a belt around the small-diameter pulley according to (1), a belt thickness is reduced
For example, the belt thickness in the case of the small scooter is about 7 mm to 12 mm, whereas the belt thickness is limited to a range close to the lower limit of about 7 mm to 9 mm.

· Condition 2

In the case of a bicycle, a main power source is the pedal force of the pedal, and the rotation speed of the pedal (for example, about 60 rpm to 80 rpm) is low as compared with the small scooter, and even if the speed is increased by the acceleration gear system, the speed is about 2000 rpm. Therefore, a maximum torque (maximum value of a torque input to a drive shaft of a variable speed belt system) is relatively large (for example, the small scooter has a torque of about 3 Nm to 12 Nm, whereas the bicycle has a relatively large torque of about 10 Nm).
That is, in a variable speed belt system provided in a belt-type continuously variable transmission for a bicycle, under a shifting condition (pulley layout in FIG. 2) in which a pitch diameter of a driving pulley (refer to a definition to be described later) is minimum (for example, about 40 mm to 45 mm), it can be said that a pulley pitch diameter (minimum pitch diameter) is smaller and the belt thickness is smaller than those in the case of the small scooter relative to a magnitude of the maximum torque.

(Problems for adapting to these Usage Conditions)

Accordingly, under the shifting condition, a winding angle (contact angle) and a winding length of the belt with respect to the driving pulley are reduced, and a contact area (area of a frictional power-transmission surface) between the driving pulley (V-groove) and the belt (V-shaped side surface) is significantly reduced, as compared with the small scooter. Therefore, frictional power-transmission is severe, that is, a slip is extremely likely to occur between the driving pulley and the belt.
In other words, in the variable speed belt system provided in the belt-type continuously variable transmission for a bicycle, it means that the variable speed belt system is placed under severe usage conditions (pulley layout and load) in which frictional power-transmission capability is insufficient and a slip between the driving pulley and the belt is most likely to be induced under shifting conditions in which a limit torque (LT) coefficient defined by an equation to be described later as an index (substitute characteristic) indicating easiness of a slip of the belt becomes excessive and a pitch diameter of the driving pulley is minimized.

For example, the LT coefficient in the case of the small scooter is about 4 to 8, whereas the LT coefficient in the case of the bicycle is about 8 to 12, which exceeds an actual range of the small scooter.

In view of the above, an object of the present invention is to provide a belt system provided in a bicycle continuously variable transmission, which is formed to be compact and can prevent a slip and ensure necessary power-transmission capability even under usage conditions in which an LT coefficient is excessively large.

SOLUTION TO PROBLEM

The present invention provides a belt system provided in a bicycle continuously variable transmission, the belt system including:

a driving pulley and a driven pulley each including a pair of sheaves capable of moving close to and away from each other in a rotation axis direction; and
a V-belt wound around the driving pulley and the driven pulley, in which
an LT coefficient of the V-belt with respect to the driving pulley is in a range of 8 to 12 under a usage condition in which a maximum torque is obtained in a state of being shifted to a lowest speed side, and
the V-belt has a belt lateral rigidity in a range of 1500 N/mm to 2500 N/mm in a ride-out change measurement test.

According to the above configuration, the belt system provided in a bicycle continuously variable transmission is formed to be compact as compared with a small scooter (LT coefficient is about 4 to 8). Under severe usage conditions (pulley layout and load) in which frictional power-transmission capability is insufficient and a slip between the driving pulley and the V-belt is most likely to be induced under shifting conditions in which the LT coefficient, which is an index (substitute characteristic) indicating easiness of a slip of the belt, is too large as 8 to 12 and a pitch diameter of the driving pulley is minimized, by setting the belt lateral rigidity (rigidity in V-belt width direction), which is an index (substitute characteristic) representing the lateral pressure resistance, that is, "difficulty in buckling deformation against an axial load (lateral pressure)" (magnitude of a ride-out change amount), to be 1500 N/mm to 2500 N/mm, which is a sufficiently high level as compared with the small scooter (belt lateral rigidity is about 300 N/mm to 1500 N/mm), the buckling deformation (ride-out change amount) of the belt due to the lateral pressure can be reduced to a minimum limit level (acceptable-level), and as a result, the slip can be prevented, and the necessary transmission capability (for example, slip ratio of 5% or less) can be ensured.

In the present invention, in the belt system provided in a bicycle continuously variable transmission,

the driving pulley may have a minimum pitch diameter in a range of 40 mm to 45 mm, and
the V-belt may have a belt thickness in a range of 7 mm to 8 mm.

According to the above configuration, the belt system provided in the bicycle continuously variable transmission can be formed to be sufficiently compact, and the belt lateral rigidity can be set to a predetermined level (1500 N/mm to 2500 N/mm) even under severe usage conditions (pulley layout and load) in which the LT coefficient is 8 to 12.

In the present invention, the belt system provided in the bicycle continuously variable transmission may be mounted on a continuously variable transmission connected to an auxiliary power source of a bicycle with the auxiliary power source.

According to the above configuration, compared with a case where a continuously variable transmission is mounted on a bicycle that does not have the auxiliary power source (such as an electric motor), in a case where a continuously variable transmission is mounted on a bicycle that has an auxiliary power source (such as an electric motor), it is possible to further improve an effect of forming a compact belt system provided in the continuously variable transmission due to a large restriction on space and weight.

ADVANTAGEOUS EFFECTS OF INVENTION

It is possible to provide a belt system provided in a bicycle continuously variable transmission, which is formed to be compact and can prevent a slip and ensure necessary power-transmission capability even under usage conditions in which an LT coefficient is excessively large.

BRIEF DESCRIPTION OF DRAWINGS

FIG. 1 is a schematic view illustrating an example of a belt system provided in a general continuously variable transmission.

FIG. 2 is a schematic view illustrating an example of a belt system provided in a bicycle continuously variable transmission according to the present invention.

FIG. 3 is a cross-sectional perspective view in a belt width direction that illustrates an example of a V-belt constituting the belt system provided in the bicycle continuously variable transmission according to the present invention.

FIG. 4 is a longitudinal cross-sectional view of the V-belt illustrated in FIG. 3.

FIG. 5 is a schematic view illustrating a method (pulley layout) of a ride-out change measurement test.

FIG. 6 is a schematic view illustrating a method (ride-out change amount) of a ride-out change measurement test.

FIG. 7 is a diagram illustrating a biaxial running tester used for a power-transmission performance (slip ratio) measurement test.

FIG. 8 is a diagram illustrating the biaxial running tester used for a durability performance test.

DESCRIPTION OF EMBODIMENTS

(Embodiment)

Hereinafter, an embodiment of a belt system provided in a bicycle continuously variable transmission according to the present invention will be described with reference to the drawings.

(Belt System 1)

As illustrated in FIG. 2, a belt system 1 provided in a bicycle belt-type continuously variable transmission includes a driving pulley 2, a driven pulley 3, and a V-belt 4 (raw-edge cogged V-belt) as in the case of a small scooter, and has a configuration in which the V-belt 4 is wound around the driving pulley 2 and the driven pulley 3 to continuously change a gear ratio.

The driving pulley 2 includes a fixed sheave 21 that cannot move in a rotation axis direction, and a movable sheave 22 that can move in the rotation axis direction (freely approach and separate from each other) (equivalent to a pair of sheaves). An inner peripheral wall of the fixed sheave 21 and an inner peripheral wall of the movable sheave 22 form a V-groove shaped inclined opposing surface (V-groove 23).

The driving pulley 2 has a structure in which a width of the V-groove 23 of the driving pulley 2 formed by the fixed sheave 21 and the movable sheave 22 can be continuously changed.

The driven pulley 3 also includes a fixed sheave 31 that are not movable in the rotation axis direction and a movable sheave 32 that are movable in the rotation axis direction (freely approach and separate from each other) (equivalent to a pair of sheaves). An inner peripheral wall of the fixed sheave 31 and an inner peripheral wall of the movable sheave 32 form a V-groove shaped inclined opposing surface (V-groove 33).

The driven pulley 3 has a structure in which a width of the V-groove 33 of the driven pulley 3 formed by the fixed sheave 31 and the movable sheave 32 can be continuously changed.

Both end surfaces of the V-belt 4 in a width direction are formed by tapered surfaces 4A whose inclination matches the V-groove 23 of the driving pulley 2 and the V-groove 33 of the driven pulley 3, and are fitted into any position in an up-down direction on opposing surfaces of the V-groove 23 and the V-groove 33 according to the changed widths of the V-groove 23 and the V-groove 33.

For example, when a state illustrated by a two-dot chain line in FIG. 2 is changed to a state illustrated by a solid line in FIG. 2 (when the movable sheave 22 and the movable sheave 32 of each pulley move in an arrow direction in FIG. 2) by widening the width of the V-groove 23 of the driving pulley 2 and narrowing the width of the V-groove 33 of the driven pulley 3, the V-belt 4 moves radially inward (downward) of the V-groove 23 on a driving pulley 2 side and radially outward (upward) of the V-groove 33 on a driven pulley 3 side, winding diameters (pitch diameter) around the driving pulley 2 and the driven pulley 3 are continuously changed, and a gear ratio can be continuously changed.

A variable speed belt used for such an application is used in a severe layout under a high load while the V-belt 4 is largely bent. That is, the variable speed belt is designed specifically to endure not only winding and rotation running between two shafts of the driving pulley 2 and the driven pulley 3 but also severe movement in a high-load environment, such as movement in a pulley radial direction and a repeated bending action due to a continuous change in a winding radius.

Although details are omitted, the driving pulley 2 and the driven pulley 3 are configured to convert belt thrusts (pressing force in a direction away from the fixed sheaves 21 and 31) acting on the movable sheaves 22 and 32 into pressing forces in directions toward the fixed sheaves 21 and 31 by a known cam system or the like (not illustrated) positioned on back sides of the movable sheaves 22 and 32.

As illustrated in FIG. 2, a drive shaft 25 (input shaft) and a driven shaft 35 (output shaft) that are disposed parallel to each other are connected to a drive side and a driven side on a shaft end side opposite to each other. That is, the driving pulley 2 and the driven pulley 3 are disposed such that positions of the fixed sheave 21 and the fixed sheave 31 in an axial direction and positions of the movable sheave 22 and the movable sheave 32 in the axial direction are opposite to each other. Accordingly, since the movable sheave 22 and the movable sheave 32 of the driving pulley 2 and the driven pulley 3 move in the same direction (direction indicated by an arrow in FIG. 2) at the time of shifting, misalignment does not occur in the V-belt 4.

For example, a state illustrated in FIG. 2 (solid line) is a state where the gear is shifted to a lowest speed side (under shifting conditions in which a pitch diameter of the driving pulley 2 is minimized), frictional power-transmission capability is insufficient, and a slip between the driving pulley 2 and the V-belt 4 is most likely to be induced.

The belt system 1 provided in a bicycle continuously variable transmission illustrated in FIG. 2 is an example of the present embodiment. Specifically for bicycle use, in order to form the belt system 1 to be sufficiently compact, the respective portions are formed to have appropriate dimensions [pulley pitch diameter (definition will be described later), inter-axis distance, V-belt 4 (thickness, belt pitch width, outer peripheral length), and the like].

The driving pulley 2 and the driven pulley 3 constituting the belt system 1 provided in a bicycle continuously variable transmission according to the present embodiment are limited (reduced) to have a minimum pitch diameter (d1) of, for example, about 45 mm (for example, about 40 mm to 45 mm), a maximum pitch diameter (d2) of, for example, about 80 mm (for example, about 70 mm to 80 mm), and an inter-axis distance between the driving pulley 2 and the driven pulley 3 of, for example, about 95 mm (for example, about 90 mm to 200 mm) due to the restriction on space.

In general, the belt system 1 provided in a bicycle continuously variable transmission is disposed in an internal space covered with a housing or the like together with other accompanying systems (acceleration gear system or the like) in order to prevent entry of foreign matter (dust, muddy water, oil, or the like) from the outside, and is almost blocked from the outside.

As described above, in the case where the belt system 1 according to the present embodiment is mounted on the bicycle continuously variable transmission, the belt system 1 is required to be compact, the driving pulley 2 and the driven pulley 3 are small in diameter, and a belt thickness of the V-belt 4 is also limited, as compared with a case where the belt-type continuously variable transmission is mounted on the small scooter (exhaust amount of 50 cc to 125 cc). The bicycle continuously variable transmission is different from a small scooter (exhaust amount 50 cc to 125 cc) in that a maximum torque (maximum value of a torque input to the drive shaft 25 of the belt system 1) is large.

(V-belt 4 (variable speed belt))

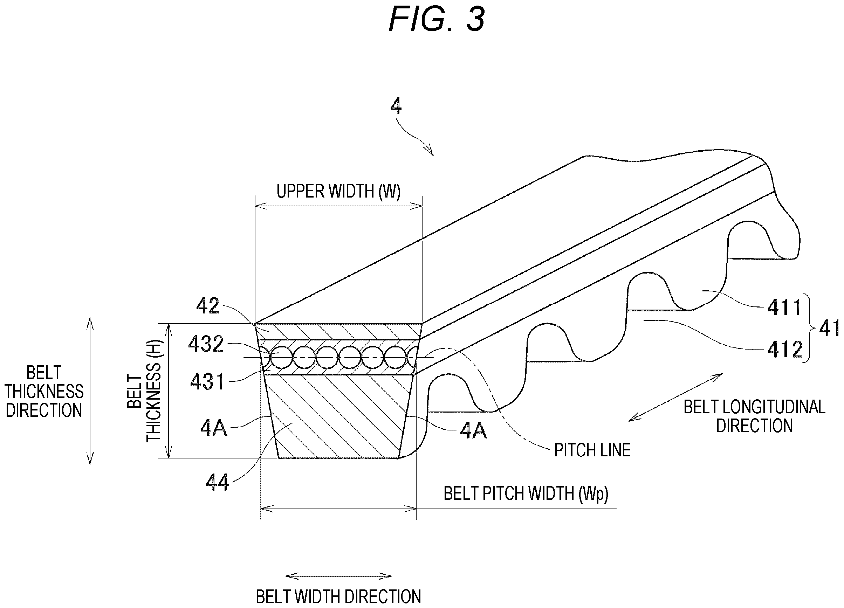

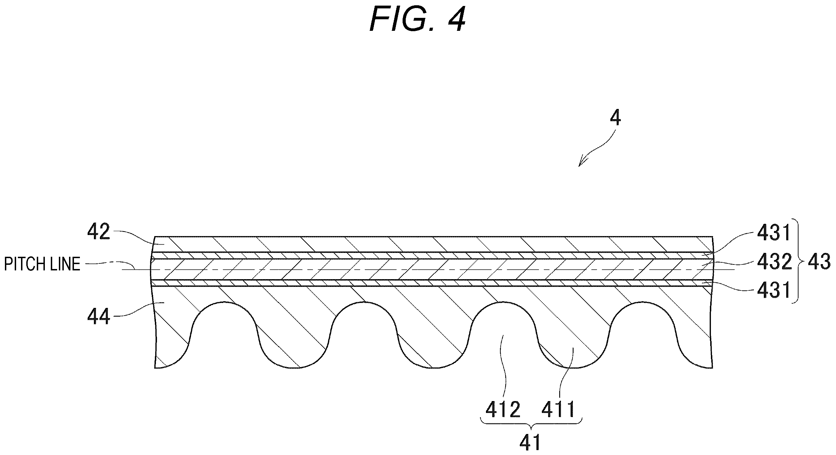

The V-belt 4 according to the present embodiment is a variable speed belt (raw-edge cogged V-belt 4) used in the belt system 1 provided in a bicycle belt-type continuously variable transmission (see FIG. 3 and FIG. 4).

Hereinafter, the raw-edge cogged V-belt 4 according to the present embodiment will be described in detail with reference to the drawings. In the following description, as illustrated in FIG. 3, a longitudinal direction of the raw-edge cogged V-belt 4 is referred to as a belt longitudinal direction, a direction orthogonal to the belt longitudinal direction and in which a plurality of cords are arranged is referred to as a belt width direction, and a direction orthogonal to the belt longitudinal direction and the belt width direction is referred to as a belt thickness direction.

The raw-edge cogged V-belt 4 (see FIG. 3 and FIG. 4) according to the present embodiment has a cog portion 41 in which cog ridges 411 and cog valleys 412 are alternately formed along the belt longitudinal direction on an inner peripheral surface of a belt main body. As illustrated in FIG. 4, the raw-edge cogged V-belt 4 has a laminated structure, and has a configuration in which a tension rubber layer 42, a tension member layer 43, and a compression rubber layer 44 are sequentially laminated from a belt outer peripheral side toward a belt inner peripheral side (side on which the cog portion 41 is formed). That is, in the raw-edge cogged V-belt 4, the tension rubber layer 42 is laminated on the belt outer peripheral side of the tension member layer 43, and the compression rubber layer 44 is laminated on the belt inner peripheral side of the tension member layer 43.

A cross-sectional shape in the belt width direction is a trapezoidal shape in which an upper width W, which is a portion where a belt width becomes maximum, decreases from the belt outer peripheral side toward the belt inner peripheral side. Furthermore, in the tension member layer 43, cords 432 used as tension members are embedded in a state of being arranged at intervals in the belt width direction, and the cog portion 41 is formed on the compression rubber layer 44 by a mold with a cog (not illustrated).

The raw-edge cogged V-belt 4 according to the present embodiment has a belt thickness (H) of, for example, about 8 mm (for example, about 7 mm to 9 mm, more preferably 7 mm to 8 mm), a belt pitch width (Wp) of, for example, about 9 mm (for example, about 9 mm to 14 mm), a belt upper width (W) of, for example, about 10 mm (for example, about 10 mm to 15 mm), and a belt outer peripheral length (BOC) of, for example, about 400 mm (for example, about 400 mm to 610 mm) due to the restriction on space.

In the present embodiment, in the case where the compression rubber layer 44 has the cog portion 41, the belt thickness means a thickness (maximum thickness of the belt) of a top portion of the cog portion 41.

(Compression Rubber Layer 44)

The compression rubber layer 44 is formed of a rubber composition (crosslinked rubber composition) containing a first rubber component.

(First Rubber Component)

As the first rubber component, a vulcanized or crosslinkable rubber is preferably used, and examples thereof include a diene rubber [a natural rubber, an isoprene rubber, a butadiene rubber, a chloroprene rubber, a styrene butadiene rubber (SBR), an acrylonitrile butadiene rubber (nitrile rubber), a hydrogenated nitrile rubber, and the like], an ethylene-$\alpha$-olefin elastomer, a chlorosulfonated polyethylene rubber, an alkylated chlorosulfonated polyethylene rubber, an epichlorohydrin rubber, an acrylic rubber, a silicone rubber, a urethane rubber, and a fluorine rubber. These rubber components may be used alone or in combination of two or more kinds thereof.

Among these rubber components, an ethylene-$\alpha$-olefin elastomer (ethylene-$\alpha$-olefin-based rubber such as an ethylene-propylene copolymer (EPM) and an ethylene-propylene-diene terpolymer (EPDM)) and a chloroprene rubber are widely used from the viewpoint that the crosslinking agent and the crosslinking accelerator easily diffuse, and in particular, the chloroprene rubber and the EPDM are preferable for a variable speed belt used in a high-load environment from the viewpoint of excellent balance of mechanical strength, weather resistance, heat resistance, cold resistance, oil resistance, adhesiveness, and the like. Further, the chloroprene rubber is particularly preferable from the viewpoint of excellent wear resistance in addition to the above properties. The chloroprene rubber may be a sulfur-modified rubber or a non-sulfur-modified rubber.

When the first rubber component contains the chloroprene rubber, a proportion of the chloroprene rubber in the first rubber component may be 50% by mass or more, preferably 80% by mass or more, more preferably 90% by mass or more (particularly 90% to 100% by mass), and most preferably 100% by mass (chloroprene rubber only). When the first rubber component contains the ethylene-$\alpha$-olefin elastomer, a proportion of the ethylene-$\alpha$-olefin elastomer is the same as the proportion of the chloroprene rubber.

(First Short Fiber)

The rubber composition forming the compression rubber layer 44 may further contain a first short fiber. Examples of the first short fiber include: a synthetic short fiber such as a polyamide short fiber (a polyamide 6 short fiber, a polyamide 66 short fiber, a polyamide 46 short fiber, an aramid short fiber, and the like), a polyalkylene arylate short fiber (for example, a polyethylene terephthalate (PET) short fiber and a polyethylene naphthalate short fiber), a liquid crystal polyester short fiber, a polyarylate short fiber (such as an amorphous wholly aromatic polyester short fiber), a vinylon short fiber, a polyvinyl alcohol short fiber, and a poly(p-phenylene benzobisoxazole) (PBO) short fiber; a natural short fiber such as cotton, hemp, and wool; and an inorganic short fiber such as a carbon short fiber. These first short fibers may be used alone or in combination of two or more kinds thereof. Among these, the aramid short fiber and the PBO short fiber are preferred, and the aramid short fiber is particularly preferred.

The first short fiber may be a short fiber obtained by cutting a fiber stretched into a fibrous form to a predetermined length. The first short fiber is preferably oriented in the belt width direction and embedded in the compression rubber layer 44 in order to prevent compression deformation of the V-belt 4 against lateral pressure from the driving pulley 2 and the driven pulley 3 (that is, in order to increase the lateral pressure resistance). In addition, in order to prevent noise (sound generation) by reducing the friction coefficient of the surface and to reduce wear due to rubbing with the driving pulley 2 and the driven pulley 3, it is preferable that the short fiber protrudes from the surface of the compression rubber layer 44.

An average fiber length of the first short fiber is, for example, about 0.1 mm to 20 mm, preferably about 0.5 mm to 15 mm (for example, about 0.5 mm to 10 mm), and more preferably about 1 mm to 6 mm (in particular, about 2 mm to 4 mm) from the viewpoint of improving the lateral pressure resistance and the wear resistance without decreasing the bendability. If a fiber length of the first short fiber is too short, mechanical properties in a grain direction cannot be sufficiently improved, and the lateral pressure resistance and the wear resistance may decrease. Conversely, if the fiber length is too long, the orientation of the short fiber in the rubber composition may decrease, resulting in a decrease in the bendability.

A single yarn fineness of the first short fiber is, for example, about 1 dtex to 12 dtex, preferably about 1.2 dtex to 10 dtex (for example, about 1.5 dtex to 8 dtex), and more preferably about 2 dtex to 5 dtex (in particular, about 2 dtex to 3 dtex) from the viewpoint of being capable of providing a high reinforcing effect without reducing the bendability. If the single yarn fineness is too large, the lateral pressure resistance and the wear resistance per compounding amount may decrease, and if the single yarn fineness is too small, the bendability may decrease due to a decrease in dispersibility in the rubber.

In order to improve the adhesiveness to the first rubber component, the first short fiber may be subjected to adhesion treatment (or surface treatment) by a commonly-used method. Examples of the surface treatment method include a method of treating with a treatment liquid containing a commonly-used surface treatment agent. Examples of the surface treatment agent include an RFL liquid containing resorcin (R), formaldehyde (F), and rubber or latex (L) [for example, an RFL liquid in which resorcin (R) and formaldehyde (F) form a condensate (RF condensate) and which contains the rubber component such as a vinyl pyridine-styrene-butadiene copolymer rubber], an epoxy compound, a polyisocyanate compound, a silane coupling agent, and a vulcanized rubber composition (for example, a vulcanized rubber composition containing, for example, wet white carbon containing a surface silanol group and containing, as a main component, hydrous silicic acid which is advantageous for increasing the chemical bonding strength with rubber). These surface treatment agents may be used alone or in combination of two or more kinds thereof, or the short fibers may be sequentially treated with the same or different surface treatment agents a plurality of times.

A proportion of the first short fiber is, for example, about 5 parts by mass to 50 parts by mass, preferably about 5 parts by mass to 40 parts by mass (for example, about 8 parts by mass to 35 parts by mass), and more preferably about 10 parts by mass to 30 parts by mass (particularly about 20 parts by mass to 30 parts by mass) with respect to 100 parts by mass of the first rubber component. If an amount of the first short fibers is too small, the lateral pressure resistance and the wear resistance may decrease, and if the amount is too large, workability may decrease, or the bendability of the V-belt 4 may decrease, resulting in a decrease in the durability.

(Other Components)

The rubber composition forming the compression rubber layer 44 may further contain additives. Examples of the additives include vulcanizing agents or crosslinking agents (sulfur crosslinking agents, organic peroxides, and the like), co-crosslinking agents (bismaleimides, and the like), vulcanization aids or vulcanization accelerators (thiuram accelerators, and the like), vulcanization retardants, metal oxides (zinc oxide, magnesium oxide, calcium oxide, barium oxide, iron oxide, copper oxide, titanium oxide, aluminum oxide, and the like), reinforcing agents (for example, carbon black and silicon oxide such as hydrated silica), fillers (clay, calcium carbonate, talc, mica, and the like), softeners (for example, oils such as paraffin oil and naphthenic oil), processing agents or processing aids (stearic acid, stearic acid metal salts, wax, paraffin, fatty acid amide, and the like), anti-aging agents (antioxidants, thermal-aging inhibitors, anti-flex-cracking agents, antiozonants, and the like), colorants, tackifiers, plasticizers, coupling agents (silane coupling agents, and the like), stabilizers (ultraviolet absorbers, thermal stabilizers, and the like), flame retardants, antistatic agents, or the like. These additives may be used alone or in combination of two or more kinds thereof. The metal oxides may act as crosslinking agents.

(Rubber Hardness)

The compression rubber layer 44 has relatively high rubber hardness in order to ensure the belt lateral rigidity (lateral pressure resistance), and the rubber hardness may be, for example, about 93 degrees to 97 degrees, and preferably about 95 degrees to 97 degrees.

In the present application, the rubber hardness of each of rubber layers indicates a value Hs (type A hardness) measured using a type A durometer in accordance with a spring type durometer hardness test specified in JIS K 6253 (2012) (vulcanized rubber and thermoplastic rubber - hardness determining method -), and may be simply referred to as the rubber hardness.

(Tension Rubber Layer 42)

The raw-edge cogged V-belt 4 may further include a tension rubber layer 42 formed of a rubber composition (vulcanized rubber composition) containing a second rubber component.

As the second rubber component, a rubber component exemplified in the first rubber component can be used, and a preferred embodiment is also the same as the first rubber component. The second rubber component may be a rubber component different from the first rubber component, but is usually the same as the first rubber component.

The rubber composition forming the tension rubber layer 42 also preferably contains a second short fiber from the viewpoint of further improving the lateral pressure resistance and the wear resistance. When not only the compression rubber layer 44 but also the tension rubber layer 42 contains the second short fiber as the short fibers, the lateral pressure resistance and wear resistance are further improved. As the second short fiber, the short fiber exemplified in the first short fiber can be used, and a preferred embodiment and a preferred proportion are the same as those of the first short fiber. The second short fiber may be a short fiber different from the first short fiber, but is usually the same as the first short fiber. The rubber composition forming the tension rubber layer 42 may also further contain other components exemplified in the rubber composition forming the compression rubber layer 44.

(Rubber Hardness)

Rubber hardness of the tension rubber layer 42 may be smaller than rubber hardness of the compression rubber layer 44 from the viewpoint of ensuring durability (for example, preventing a crack in the tension rubber layer 42) while ensuring the belt lateral rigidity (lateral pressure resistance). The rubber hardness (type A hardness) of the tension rubber layer 42 may be, for example, 89 degrees to 95 degrees, preferably about 89 degrees to 93 degrees (particularly 93 degrees).

(Tension Member Layer 43)

The cords 432 used as tension members are usually twisted cords arranged at predetermined intervals in the belt width direction. The cords 432 are arranged in the belt longitudinal direction, and a plurality of cords 432 may be arranged parallel to the belt longitudinal direction, but, from the viewpoint of productivity, the cords 432 are usually arranged in a spiral shape, extending almost parallel to the belt longitudinal direction of the raw-edge cogged V-belt at predetermined pitches. When the cords 432 are arranged in a spiral shape, an angle of each cord 432 with respect to the belt longitudinal direction may be, for example, 5° or less, and it is more preferable that the angle is closer to 0° from the viewpoint of belt running performance.

The tension member layer 43 may be formed of only the cord 432 as long as the tension member layer 43 includes the cord 432 whose arrangement density is adjusted, and is preferably the tension member layer 43 (adhesion rubber layer 431) formed of a crosslinked rubber composition in which the cord 432 is embedded from the viewpoint of preventing peeling between layers and improving belt durability.

The tension member layer 43 formed of a crosslinked rubber composition in which the cord 432 is embedded is generally referred to as the adhesion rubber layer 431, and the cord 432 is embedded in a layer formed of a crosslinked rubber composition containing a rubber component (see FIG. 3 and FIG. 4). The adhesion rubber layer 431 is interposed between the tension rubber layer 42 and the compression rubber layer 44 to adhere the tension rubber layer 42 and the compression rubber layer 44, and the cord 432 is embedded in the adhesion rubber layer 431. A mode of embedding the cord 432 is not particularly limited as long as a part of the cord 432 is embedded in the adhesion rubber layer 431, and a mode in which the cord 432 is embedded in the adhesion rubber layer 431 (that is, a mode in which the entire cord 432 is completely embedded in the adhesion rubber layer 431) is preferable from the viewpoint of improving durability.

(Cord 432)

As the cord 432, generally, a twisted cord using a multifilament yarn (for example, a piled cord, a single twisted cord or Lang twisted cord) can be used.

Examples of the fiber constituting the cord 432 include: a synthetic fiber such as a polyolefin fiber (a polyethylene fiber, a polypropylene fiber, and the like), a polyamide fiber (a polyamide 6 fiber, a polyamide 66 fiber, a polyamide 46 fiber, an aramid fiber, and the like), a polyester fiber (polyalkylene arylate fiber) [a poly $C_{2-4}$ alkylene $C_{6-14}$ arylate fiber such as a polyethylene terephthalate (PET) fiber and a polyethylene naphthalate (PEN) fiber, and the like], a vinylon fiber, a polyvinyl alcohol fiber, and a poly(p-phenylene benzobisoxazole) (PBO) fiber; a natural fiber such as cotton, hemp, and wool; and an inorganic fiber such as a carbon fiber. Those fibers may be used alone or in combination of two or more kinds thereof.

Among these fibers, from the viewpoint of high modulus, synthetic fibers such as polyester fibers (polyalkylene arylate fibers) having $C_{2-4}$ alkylene-$C_{6-12}$ arylate such as ethylene terephthalate and ethylene-2, 6-naphthalate as main constituent units, and polyamide fibers (aramid fibers and the like), and inorganic fibers such as carbon fibers are widely used, and polyester fibers (particularly, polyethylene terephthalate fibers and polyethylene naphthalate fibers) and polyamide fibers (particularly, aramid fibers) are preferred, and polyamide fibers (particularly, aramid fibers) are most preferred.

A total fineness of the cord 432 may be, for example, 2000 dtex to 17000 dtex, preferably 4000 dtex to 15000 dtex, and more preferably 6000 dtex to 13000 dtex. The multifilament yarn may contain, for example, about 100 monofilament yarns to 5000 monofilament yarns, preferably 500 monofilament yarns to 4000 monofilament yarns, and more preferably 1000 monofilament yarns to 3000 monofilament yarns.

An average wire diameter of the cord 432 (diameter of the twisted cord) may be, for example, about 0.5 mm to 3 mm, preferably about 0.6 mm to 2.0 mm, and more preferably about 0.7 mm to 1.5 mm. If the cord 432 is too thin, the bendability is improved, but a tension of the V-belt 4 decreases, and in the worst case, the V-belt 4 is cut. If the cord 432 is too thick, the bending resistance of the V-belt 4 may decrease, and the V-belt 4 may excessively generate heat.

When the cord 432 is embedded in the adhesion rubber layer 431, the cord 432 may be subjected to surface treatment in order to improve adhesiveness to the crosslinked rubber composition forming the adhesion rubber layer 431. Examples of the surface treatment agent include surface treatment agents exemplified as the surface treatment agents of the short fibers of the compression rubber layer 44 described above. The surface treatment agents may be used alone or in combination of two or more kinds thereof, or the short fibers may be sequentially treated with the same or different surface treatment agents a plurality of times. The cord 432 is preferably subjected to adhesion treatment with a resorcin-formalin-latex treatment liquid (RFL liquid) at least.

(Adhesion Rubber Layer 431)

As the rubber component constituting the crosslinked rubber composition forming the adhesion rubber layer 431, a rubber component exemplified as a rubber component of the compression rubber layer 44 can be used, and the preferable form of the rubber component is also the same as the rubber component of the compression rubber layer 44. The rubber composition forming the adhesion rubber layer 431 may further contain the short fibers or other components exemplified in the rubber composition forming the compression rubber layer 44.

(Characteristics of Adhesion Rubber Layer 431)

The adhesion rubber layer 431 preferably has lower rubber hardness than the compression rubber layer 44 (or the tension rubber layer 42). By adjusting the hardness of the adhesion rubber layer 431 to such a low hardness, the adhesion rubber layer 431 can be largely deformed when a shear stress acts thereon, and peeling between the tension member layer 43, and the compression rubber layer 44 and the tension rubber layer 42 can be prevented.
The rubber hardness (type A hardness) of the adhesion rubber layer 431 is, for example, 60 degrees to 85 degrees, preferably 65 degrees to 84 degrees, more preferably 70 degrees to 83 degrees, and still more preferably 75 degrees to 82 degrees (particularly 82 degrees). If the rubber hardness is too low, the lateral pressure resistance may decrease, and if the rubber hardness is too high, the adhesiveness may decrease.
A difference in rubber hardness between the compression rubber layer 44 and the adhesion rubber layer 431 (rubber hardness of the compression rubber layer 44 - rubber hardness of the adhesion rubber layer 431) may be 8 degrees or more, for example, 8 degrees to 37 degrees, preferably 11 degrees to 32 degrees, more preferably 12 degrees to 27 degrees, still more preferably 13 degrees to 22 degrees, and most preferably 13 degrees to 15 degrees. If the difference in rubber hardness between the compression rubber layer 44 and the adhesion rubber layer 431 is too small, the heat resistance, lateral pressure resistance, and bending fatigue resistance may not be improved. Conversely, if the difference is too large, the same may occur.
An average thickness of the adhesion rubber layer 431 is, for example, 0.8 mm to 3 mm, preferably 1.2 mm to 2.8 mm, and more preferably 1.5 mm to 2.5 mm.

(Reinforcing Fabric)

The V-belt 4 according to the present embodiment does not include a reinforcing fabric, but in a case where the V-belt 4 includes a reinforcing fabric, the reinforcing fabric may be laminated on both or one of the tension rubber layer 42 and the compression rubber layer 44 (including the cog portion 41) (an upper surface of the tension rubber layer 42 and a lower surface of the compression rubber layer 44). A reinforcing fabric may be embedded in the compression rubber layer 44 and/or the tension rubber layer 42.
As the reinforcing fabric, for example, a fabric (particularly, a woven fabric) such as a woven fabric, a wide-angle woven fabric, a knitted fabric, or a non-woven fabric can be used. If necessary, the fabric may be subjected to treatment (immersion, coating, or the like) with a liquid adhesive (RFL liquid, rubber cement, or the like), friction treatment of rubbing a rubber composition having a high adhesiveness into the fabric, or treatment of laminating a rubber composition sheet having a high adhesiveness and the fabric.

(Description of Usage Conditions of Belt system 1: Problems)

In the belt system 1 provided in a bicycle continuously variable transmission, the belt system 1 is placed under severe usage conditions (pulley layout and load) in which frictional power-transmission capability is insufficient and a slip between the driving pulley 2 and the V-belt 4 is very likely to be induced under shifting conditions in which a limit torque (LT) coefficient defined by Equation 1 to be described later as an index (substitute characteristic) indicating easiness of a slip of the V-belt 4 becomes excessive and a pitch diameter of the driving pulley 2 is minimized. This is because, the LT coefficient is about 4 to 8 in the case of the small scooter, whereas the LT coefficient is about 8 to 12 in the case of the above usage conditions, which exceeds an actual range of the small scooter.
That is, in the belt system 1 provided in a bicycle continuously variable transmission according to the present embodiment, it is assumed that the LT coefficient of the V-belt 4 with respect to the driving pulley 2 is in a range of 8 to 12 under a usage condition in which a maximum torque is obtained in a state of being shifted to a lowest speed side (shifting condition in which the pitch diameter of the driving pulley 2 is minimized). Specifically, the state illustrated in FIG. 2 (solid line) is a state of being shifted to the lowest speed side (under shifting conditions in which the pitch diameter of the driving pulley 2 is minimized), the frictional power-transmission capability is insufficient, and the slip between the driving pulley 2 and the V-belt 4 is most likely to be induced.

(Description of Usage Conditions of Belt system 1: Definition)

[Definition]

· Pitch Line

The pitch line refers to a center line of a tension member (cord 432) embedded in the V-belt 4.

The pitch line may refer to a pitch line extending in the belt width direction as illustrated in FIG. 3 or a pitch line extending in the belt longitudinal direction as illustrated in FIG. 4.

· Belt Pitch Width (Wp)

The belt pitch width is a length in the belt width direction along the pitch line (see FIG. 3).

· Pulley Pitch Diameter (d)

A pulley pitch diameter refers to a diameter (that is, winding diameter) of a circle (pitch circle) formed by a pitch line of a portion where the V-belt 4 is wound around the pulley.

The pulley pitch diameter is twice the following pulley pitch radius (r) (d = 2r).

· Pulley Pitch Radius (r)

The pulley pitch radius (r) is a radius of a circle (pitch circle) formed by a pitch line of a portion where the V-belt 4 is wound around the pulley.

· Minimum Pitch Diameter (d1)

The minimum pitch diameter (d1) is a minimum value (lower limit value) of the pulley pitch diameter (d) when the V-belt 4 is wound around the pulley.

The minimum pitch diameter (d1) is twice the following minimum pitch radius (r1) (d1 = 2r1).

· Minimum Pitch Radius (r1)

The minimum pitch radius (r1) is a minimum value (lower limit value) of the pulley pitch radius (r) when the V-belt 4 is wound around the pulley.

· LT Coefficient

The limit torque (LT) coefficient is an index (substitute characteristic) representing "easiness of a slip of a belt".

(Description of Usage Conditions of Belt system 1: LT Coefficient)

In the case of a variable speed belt system such as the belt system 1 provided in a bicycle continuously variable transmission according to the present embodiment, the LT coefficient is a coefficient expressed by a numerical value obtained by dividing the effective tension borne by the driving pulley 2 by an area of the frictional power-transmission surface (product of the winding length (L) and the belt thickness (H)), and can be expressed by Equation 1.

(Equation 1) LT Coefficient

LT coefficient = Effective tension (Te)/Winding length (L)/Belt thickness (H)

The unit of the LT coefficient calculated with reference to the following is strictly $kgf/cm^2$, but for convenience, the LT coefficient is expressed dimensionless.

Here, the effective tension (Te) (unit: kgf) is the tension for rotating the pulley (difference between the tension on a tension side and the tension on a slack side), and can be expressed by Equation 2.

$$\text{(Equation 2) Effective Tension}$$

$$Te = Tmax/(r/100)/9.81$$

Tmax: maximum torque (unit: Nm) ... maximum value of a torque input to a drive shaft
r: pulley pitch radius (unit: cm) ... The pulley pitch radius can be calculated from a radius of a circle (pitch circle) formed by a pitch line of a portion where the belt is wound around the pulley.
The winding length (L) (unit: cm) is a length along a pitch line of a portion where the belt is wound around the pulley, and can be expressed by Equation 3.

$$\text{(Equation 3) Winding Length}$$

$$L = r \times \theta$$

$\theta$: winding angle (contact angle) (unit: radian) ... The winding angle can be calculated as a central angle of a portion where the belt is wound around the pulley with respect to an arc formed by a pitch line.

Belt thickness (H) (unit: cm): total thickness of belt (thickness of the entire belt including the cog portion)

The LT coefficient with respect to the driving pulley under the usage condition in which the maximum torque is obtained in the state of being shifted to the lowest speed side, which is defined in the present application, is calculated by replacing the "pulley pitch radius" (r) with the "minimum pitch radius" (r1) of the driving pulley.

(Description of Usage Conditions of Belt system 1: Meaning of Numerical Value Range of LT Coefficient)

When the numerical value of the LT coefficient is excessively large (for example, a level of about 8 to 12 as in the present embodiment), it means that the belt system 1 is placed under severe usage conditions (pulley layout and load) in which the frictional power-transmission capability is insufficient, and a slip between the driving pulley 2 and the V-belt 4 is extremely easily induced.
The smaller the numerical value of the LT coefficient, the more the frictional power-transmission capability becomes, and stable running (for example, running at a slip ratio of 5% or less) can be expected.

(Belt Lateral rigidity: Description)

The belt lateral rigidity is an index (substitute characteristic) representing lateral pressure resistance of the V-belt 4 (per one), that is, "difficulty in buckling deformation against an axial load (lateral pressure)" (magnitude of a later-described ride-out change amount).
That is, a value (N/mm) of an axial load (N) with respect to a ride-out change amount (mm) in the ride-out change measurement test is defined as a belt lateral rigidity (N/mm).

(Belt Lateral rigidity: Ride-out Change Measurement Test)

[Tester]

Ride-out Change Measurement Device

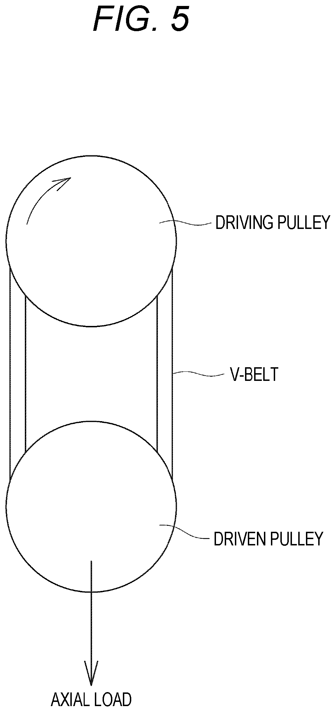

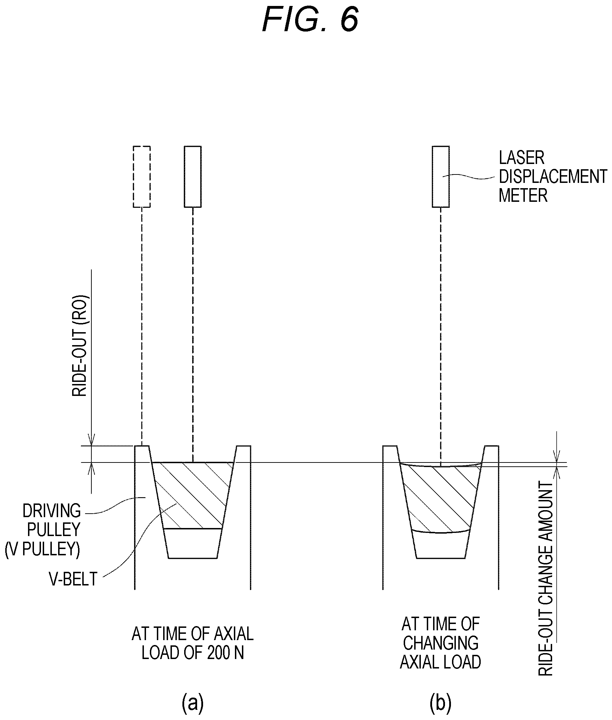

[Measuring method] (1) The V-belt 4 is wound around the driving pulley and the driven pulley to apply an initial load (axial load of 200 N), and the belt is caused to run under predetermined test conditions (pitch diameter of the driving pulley of 45 mm, pitch diameter of the driven pulley of 45 mm, drive shaft rotation speed of 50 rpm, axial load of 200 N to 1000 N, ambient temperature of 23 ± 2°C). (See FIG. 5) (2) The axial load is changed (increased stepwise from 200 N to 1000 N), a ride-out change amount on a driving pulley side (see FIG. 6) is sequentially measured by the laser displacement meter to obtain a relation line diagram (graph) between the axial load (N) and the ride-out change amount (mm). (3) The belt lateral rigidity [the value (N/mm) of the axial load (N) with respect to the ride-out change amount (mm)] is obtained from an inclination (inclination of an approximate straight line connecting a passing point on a graph when the axial load is 400 N and a passing point on the graph when the axial load is 1000 N) obtained by linearly approximating a range of the axial load of 400 N to 1000 N on the graph.

Here, the ride-out (RO) refers to a separation distance (mm) in a radial direction between an outer peripheral surface of the V-belt 4 (belt outer peripheral surface on two equal segments in a belt width direction: measurement position of a laser displacement meter) and an outer peripheral surface of the driving pulley (V pulley) (see FIG. 6).

Further, the ride-out (RO) change amount (mm) is a value obtained by subtracting the ride-out (mm) under the initial load (axial load: 200 N) from the ride-out (mm) under each axial load after the change (see FIG. 6).

(Belt Lateral rigidity: Meaning of Numerical Value Range)

The V-belt 4 according to the present embodiment has a belt lateral rigidity in a range of 1500 N/mm to 2500 N/mm in a ride-out change measurement test.

When the belt lateral rigidity is less than 1500 N/mm, a slip when the LT coefficient with respect to the driving pulley 2 of the V-belt 4 is in the range of 8 to 12 cannot be prevented (for example, slip ratio exceeds 5%), and the required transmission capability (for example, slip ratio of 5% or less) cannot be secured.

On the other hand, when the belt lateral rigidity exceeds 2500 N/mm, the bending rigidity of the V-belt 4 becomes too large, and it is not possible to ensure the winding performance of the V-belt 4 around the driving pulley 2 (bendability of the V-belt 4) at a minimum pitch diameter (shifting condition in which a pitch diameter of the driving pulley 2 is minimized: for example, 45 mm) to be used.

(Method for Producing Raw-Edge Cogged V-Belt 4)

A method for producing the raw-edge cogged V-belt 4 is not particularly limited, and a lamination process of each layer (a method for producing a belt sleeve) can use a commonly-used method. A representative method for producing the raw-edge cogged V-belt 4 (in the case of the configuration having a reinforcing fabric) will be described.

First, a laminated body of a reinforcing fabric (lower fabric) and a compression rubber layer sheet (un-crosslinked rubber sheet) is placed such that the reinforcing fabric is in contact with a flat cogged mold in which tooth portions and groove portions are alternately arranged, and is pressed at a temperature of about 60°C to 100°C (particularly 70°C to 80°C) to produce a cog pad (pad which is not completely crosslinked and is in a semi-crosslinked state) having a cog portion 41 molded. Both ends of the cog pad may be cut vertically from an appropriate position (particularly, a top portion of the cog ridge 411).

Next, an inner mold in which the tooth portions and the groove portions corresponding to the cog portion 41 are alternately arranged is put on a cylindrical metal mold, and the cog pad is mounted by winding the cog pad around an outer periphery of the inner mold while engaging the tooth portions with the groove portions and joining both ends (particularly, top portion of the cog ridge 411). Next, a second adhesion rubber layer sheet (lower adhesion rubber: un-crosslinked rubber sheet) is wound around an outer circumference of the mounted cog pad, and then the cord (twisted cord) 432 for forming the tension member is spun spirally, and a first adhesion rubber layer sheet (upper adhesion rubber: un-crosslinked rubber sheet), a tension rubber layer sheet (un-crosslinked rubber sheet), and the reinforcing fabric (upper fabric) are sequentially wound on an outer circumference of the twisted cord to produce an un-crosslinked belt precursor.

Thereafter, crosslinking molding is performed by a known crosslinking device (such as vulcanization can) to prepare a belt sleeve. Thereafter, a cutter or the like is used to cut the crosslinked belt sleeve into a V shape to obtain the raw-edge cogged V-belt 4.

The adhesion rubber layer 431 may be formed of one or a plurality of adhesion rubber layer sheets, and the cord 432 (twisted cord) forming a tension member may be spun in association with the number of adhesion rubber layer sheets or a laminating order depending on a position of embedding in the adhesion rubber layer 431.

(Effects)

According to the above configuration, the belt system 1 provided in a bicycle continuously variable transmission is formed to be compact as compared with a small scooter (LT coefficient is about 4 to 8). Under severe usage conditions (pulley layout and load) in which frictional power-transmission capability is insufficient and a slip between the driving pulley 2 and the V-belt 4 is very likely to be induced under shifting conditions in which the LT coefficient, which is an index (substitute characteristic) indicating easiness of a slip of the belt, is too large as 8 to 12 and a pitch diameter of the driving pulley 2 is minimized, by setting the belt lateral rigidity (rigidity in belt width direction), which is an index (substitute characteristic) representing the lateral pressure resistance, that is, "difficulty in buckling deformation against an axial load (lateral pressure)" (magnitude of the ride-out change amount), to be 1500 N/mm to 2500 N/mm, which is a sufficiently high level as compared with the small scooter (belt lateral rigidity is about 300 N/mm to 1500 N/mm), the buckling deformation (ride-out change amount) of the V-belt 4 due to the lateral pressure can be reduced to a minimum limit level (acceptable-level), and as a result, the slip can be prevented, and the necessary transmission capability (for example, slip ratio of 5% or less) can be ensured.

In the belt system 1, a minimum pitch diameter of the driving pulley 2 may be in a range of 40 mm to 45 mm, and a belt thickness of the V-belt 4 may be in a range of 7 mm to 8 mm. According to the configuration, the belt system 1 provided in a bicycle continuously variable transmission can be formed to be sufficiently compact, and the belt lateral rigidity can be set to a predetermined level (1500 N/mm to 2500 N/mm) even under severe usage conditions (pulley layout and load) in which the LT coefficient is 8 to 12.

(Other Embodiments)

The belt system 1 provided in the bicycle continuously variable transmission may be mounted on a continuously variable transmission (a belt-type continuously variable transmission (CVT) for a bicycle with an electric assist) connected to an auxiliary power source of a bicycle with the auxiliary power source.

According to the configuration, compared with a case where a continuously variable transmission is mounted on a bicycle that does not have an auxiliary power source (such as an electric motor), in a case where a continuously variable transmission is mounted on a bicycle that has an auxiliary power source (such as an electric motor), it is possible to further improve an effect of forming the compact belt system 1 provided in the continuously variable transmission due to a large restriction on space and weight.

Examples

In the present invention, it is necessary to prevent a slip and ensure necessary transmission capability even when a V-belt is applied to a belt system provided in a bicycle continuously variable transmission which is formed to be compact and is used under a condition where an LT coefficient is excessively large.

In the present examples, belt systems according to Examples 1 to 9, Comparative Examples 1 to 7, and Reference Example 1 (hereinafter, referred to as respective test pieces) were produced, a compactness evaluation and a belt running test (transmission performance (slip ratio) measurement test, durability performance test) were performed to perform the comparative verification.

The present invention will be described in more detail below based on Examples, but the present invention is not limited to these Examples.

[Used Materials of V-Belt]

(Cord)

Twisted cords A1 to A2 having configurations illustrated in Table 1 were produced as cords of the V-belt of the respective test pieces.

The twisted cord A1 was produced by the following procedure.

Piled cords (average wire diameter of 1.19 mm) having total fineness of 10,080 dtex were prepared in which two multifilament bundles of an aramid fiber having fineness of 1,680 dtex are aligned and primary twisted, and three of the twisted yarns are secondary twisted together in an opposite direction to the primary twist, and further were subjected to adhesion treatment to prepare treated cords.

For the twisted cord A2, plied cords (average wire diameter of 1.00 mm) having total fineness of 6,600 dtex were prepared in which two multifilament bundles of a polyethylene terephthalate (PET) fiber having fineness of 1,100 dtex are aligned and primary twisted, and three of the twisted yarns are secondary twisted together in an opposite direction to the primary twist, and further were subjected to adhesion treatment to prepare treated cords.

Table 1

|  | A1 | A2 |
|---|---|---|
| Cord type (type of fiber) | Aramid fiber | PET |
| Fineness (dtex) of multifilament yarn | 1,680 | 1,100 |
| Configuration | $2 \times 3$ | $2 \times 3$ |
| Twisting method | Piled cord | Piled cord |
| Total fineness (dtex) | 10,080 | 6,600 |
| Cord diameter (mm) | 1.19 | 1.00 |

(continued)

|  | A1 | A2 |
|---|---|---|
| Elastic modulus (index) | 100 | 43 |

(Elastic Modulus of Cord)

Here, a method of measuring an elastic modulus (tensile elastic modulus) of the cord (in the longitudinal direction) shown in Table 1 will be described.

A chuck (grasping tool) is mounted to a lower fixing portion and an upper load cell connection portion of an autograph ("AGS-J10kN" manufactured by Shimadzu Corporation), and both ends of the cord are grasped by the chuck.

Next, in a stress-strain curve measured when the cord was pulled at a speed of 250 mm/min until being cut, an inclination of a straight line in a region (100 N to 200 N) having a comparatively linear relation was calculated as the tensile elastic modulus of the cord.

The measurement results were arranged as indices when the elastic modulus (MPa) of the cord of A1 was 100.

(Rubber Composition)

Rubber compositions C1 to C5 having compositions shown in Tables 2 and 3 were mixed and kneaded in a Banbury mixer to prepare a massive un-crosslinked rubber composition. The obtained un-crosslinked rubber composition was passed through a calendar roll to form a rolled rubber sheet having a predetermined thickness, thereby producing an un-crosslinked rubber sheet for forming each rubber layer. Results of measuring the hardness and tensile strength of a crosslinked product (crosslinked rubber) of each rubber composition are also shown in Tables 2 to 3.

Table 2

|  |  | Adhesion rubber layer |
|---|---|---|
|  |  | Rubber composition C1 |
| Composition (Part by mass) | Chloroprene rubber | 100 |
|  | Magnesium oxide | 4 |
|  | Stearic acid | 2 |
|  | Anti-aging agent | 4 |
|  | Carbon black | 40 |
|  | Silica | 20 |
|  | Plasticizer | 5 |
|  | Crosslinking accelerator | 1 |
|  | Zinc oxide | 5 |
| Crosslinked rubber physical property | Hardness Hs (type A) | 82 |
|  | Tensile strength (MPa) | 16.5 |

| Table 3 | | | | | |
|---|---|---|---|---|---|
|  |  | Compression rubber layer, tension rubber layer | | | |
|  |  | Rubber composition C2 | Rubber composition C3 | Rubber composition C4 | Rubber composition C5 |
|  | Chloroprene rubber | 100 | 100 | 100 | 100 |
|  | Aramid short fiber | 20 | 20 | 25 | 30 |
|  | Naphthenic oil | 5 | 5 | 5 | 5 |
|  | Magnesium oxide | 4 | 4 | 4 | 4 |

(continued)

| Table 3 | | | | | |
|---|---|---|---|---|---|
| | | Compression rubber layer, tension rubber layer | | | |
| | | Rubber composition C2 | Rubber composition C3 | Rubber composition C4 | Rubber composition C5 |
| Composition (Part by mass) | Carbon black | 40 | 50 | 50 | 50 |
| | Anti-aging agent | 4 | 4 | 4 | 4 |
| | Zinc oxide | 5 | 5 | 5 | 5 |
| | N, N' -m-phenylene dimaleimide | 3 | 3 | 3 | 3 |
| | Stearic acid | 2 | 2 | 2 | 2 |
| | Sulfur | 0.5 | 0.5 | 0.5 | 0.5 |
| Crosslinked rubber physical property | Hardness Hs (type A) | 89 | 93 | 95 | 97 |
| | Tensile strength (MPa) [Grain parallel direction] | 26.5 | 30.5 | 42.5 | 45.0 |

(Raw Materials of Rubber Composition)

Chloroprene rubber: "PM-40" manufactured by Denka Co., Ltd.

Magnesium oxide: "Kyowamag 30" manufactured by Kyowa Chemical Industry Co., Ltd.

Stearic acid: "Stearic acid TSUBAKI" manufactured by NOF Corporation

Anti-aging agent: "Nonflex OD-3" manufactured by Seiko Chemical Co., Ltd.

Carbon black: "Seast 3" manufactured by Tokai Carbon Co., Ltd.

Silica: "ULTRASIL (registered trademark) VN3" manufactured by Evonik Japan Co., Ltd., BET specific surface area: 175 $m^2/g$

Plasticizer: "Adeka Cizer RS-700" manufactured by ADEKA Corporation

Crosslinking accelerator: "Nocceler TT" manufactured by Ouchi Shinko Chemical Industrial Co., Ltd.

Zinc oxide: "Zinc oxide III" manufactured by Seido Chemical Industry Co., Ltd.

N,N'-m-phenylene dimaleimide: "Vulnoc PM" manufactured by Ouchi Shinko Chemical Industrial Co., Ltd.

Aramid short fiber: "Conex short fiber" manufactured by Teijin Co., Ltd., short fiber with an average fiber length of 3 mm, an average fiber diameter of 14 $\mu$m, an adhesion rate of a solid content of 6% by mass subjected to adhesion treatment with an RFL liquid (resorcin: 2.6 parts by mass, 37% formalin: 1.4 parts by mass, vinylpyridine-styrene-butadiene copolymer latex (manufactured by Zeon Corporation, Japan): 17.2 parts by mass, water: 78.8 parts by mass)

(Rubber Hardness Hs of Crosslinked Rubber)

The un-crosslinked rubber sheet for each rubber layer was press-heated at a temperature of 160°C for 30 minutes to produce a crosslinked rubber sheet (100 mm × 100 mm × 2 mm thickness). A laminate obtained by laminating three crosslinked rubber sheets was used as a sample, and hardness of the crosslinked rubber sheet was measured using a type A durometer in accordance with a spring type durometer hardness test specified in JIS K6253 (2012).

(Tensile Strength of Crosslinked Rubber)

A crosslinked rubber sheet produced for measuring the rubber hardness Hs of the crosslinked rubber was used as a sample, a test piece punched into a dumbbell shape (No. 5 shape) was produced in accordance with JIS K6251 (2017). In the sample containing the short fibers, a dumbbell-shaped test piece was collected such that an arrangement direction of the short fibers (grain parallel direction) was a tensile direction. A value (tensile strength T) obtained by dividing, by an initial cross-sectional area of the test piece, a maximum tensile force recorded when both ends of the test piece were gripped by a chuck (grip), and the test piece was pulled at a speed of 500 mm/min until the test piece was cut was defined as a tensile strength.

[Production of V-Belt]

V-belts (raw-edge cogged V-belt) of the respective test pieces were produced by the method described in the above embodiment (however, no reinforcing fabric was used) using the cords of A1 to A2 (adhesion treatment product) and the rubber compositions of C1 to C5 (un-crosslinked rubber sheet) described in the used materials.
Crosslinking was performed at 180°C for 30 minutes to prepare a belt sleeve (crosslinked sleeve) in which a predetermined cog portion was formed on an outer peripheral side, and the obtained crosslinked sleeve was cut to a predetermined width (upper width W) with a cutter, and a side surface was further cut into a V shape at a V angle of 20°. Then, an inner peripheral side and the outer peripheral side were reversed to form a cog portion on the inner peripheral side, and a V-belt (raw-edge cogged V-belt) formed with predetermined (described in Tables 5 to 11) dimensions [belt thickness (H), belt pitch width (Wp), and belt outer circumference length (BOC)] was obtained for each of the test pieces.

[Driving Pulley and Driven Pulley]

The driving pulley and the driven pulley were configured to have predetermined dimensions (minimum pitch diameter (d1), maximum pitch diameter (d2), and inter-axis distance) (described in Tables 5 to 11) for each of the test pieces.

[LT Coefficient]

The LT coefficient with respect to the driving pulley of the V-belt was calculated for each of the test pieces using values of a maximum torque (maximum value of a torque input to a drive shaft) (Tmax) and dimensions of each of the "V-belt" and the "driving pulley and the driven pulley" set for each of the test pieces in accordance with a method (Equations 1 to 3) described in the above embodiment (description of usage conditions of the belt system 1: LT coefficient).
The maximum torque (Tmax) was uniformly set to 10 Nm among the respective test pieces.

[Belt Lateral Rigidity]

The belt lateral rigidity (P) [the value (N/mm) of the axial load (N) with respect to the ride-out change amount (mm) in the ride-out change measurement test] was measured for each test piece (V-belt) according to a ride-out change measurement test method described in the above embodiment (belt lateral rigidity: description).

[Overview of Respective Test Pieces]

An outline of each of the test pieces (production of the V-belt, configurations of the driving pulley and the driven pulley, and actual values of the LT coefficient and the belt lateral rigidity) is shown below in the order of the test pieces described in Tables 5 to 11 of verification results to be described below based on Example 1.

[Example 1]

(V-belt)

A belt sleeve (crosslinked sleeve) having a thickness of 8 mm was produced using an aramid cord of A1, an adhesion rubber sheet (un-crosslinked rubber sheet) of the rubber composition C1 (rubber hardness 82° after crosslinking), a tension rubber sheet (un-crosslinked rubber sheet) of the rubber composition C3 (rubber hardness 93° after crosslinking), and a compression rubber sheet (un-crosslinked rubber sheet) of the rubber composition C4 (rubber hardness 95° after crosslinking ) to obtain a V-belt (raw-edge cogged V-belt).

The obtained V-belt had a belt thickness (H) of 8 mm (among them, the height of the cog ridge is 4 mm), a belt pitch width (Wp) of 9.3 mm, and a belt outer circumference length (BOC) of 400 mm.

(Driving Pulley and Driven Pulley)

A minimum pitch diameter (d1) was set to 45 mm, a maximum pitch diameter (d2) was set to 80 mm, and an inter-axis distance was 94 mm as a result of using the above V-belt.

(LT Coefficient and Belt Lateral Rigidity)

As a result, the LT coefficient of the V-belt with respect to the driving pulley was 9.1, and the belt lateral rigidity (P) was 2000 N/mm. Here, details of the LT coefficient calculation process (Equations 1 to 3) will be described below.

(Equation 1) LT Coefficient

LT coefficient = Effective tension (Te)/Winding length (L)/Belt thickness (H)

$$= 45.3/6.23/0.8 = 9.1$$

(Equation 2) Effective Tension (Te)

$$Te = Tmax/(r/100)/9.81$$

$$= 10/(4.5/2/100)/9.81 = 45.3 \text{ (kgf)}$$

(Equation 3) Winding Length (L)

$$L = r \times \theta = (4.5/2) \times 2.77 = 6.23 \text{ (cm)}$$

Herein, the θ [winding angle (contact angle) of the belt with respect to the driving pulley (minimum pitch diameter)] was 2.77 radians (159°).

[Example 2]

(V-belt)

A belt sleeve (crosslinked sleeve) having a thickness of 8 mm was produced using the same used materials as in Example 1, and a V-belt (raw-edge cogged V-belt) was obtained. The dimensions (thickness, pitch width, and outer circumference length) of the obtained V-belt were the same as those in Example 1.

(Driving Pulley and Driven Pulley)

In contrast to Example 1, the maximum pitch diameter (d2) of 80 mm was not changed, and the minimum pitch diameter (d1) was changed to 40 mm, and as a result of using the above V-belt, the inter-axis distance is 97 mm.

In this variable speed belt system (the belt thickness is about 8 mm and the belt pitch width is about 9 mm), when the pulley pitch diameter is less than 40 mm in a state where the V-belt is wound around the pulleys, the V-belt (inner peripheral surface) may come into contact with rotating shafts (outer peripheral surface) of the pulleys. Accordingly, the pulley pitch diameter of 40 mm corresponds to a lower limit value of an allowable range in which the variable speed belt system can function normally.

(LT Coefficient and Belt Lateral Rigidity)

As a result, the LT coefficient of the V-belt with respect to the driving pulley was 12, and the belt lateral rigidity (P) was 2000 N/mm.

[Example 3]

(V-belt)

A belt sleeve (crosslinked sleeve) having a thickness of 8 mm was produced using the same used materials as in Example 1 except that the cord was changed to A2 (PET cord), and a V-belt (raw-edge cogged V-belt) was obtained. The dimensions (thickness, pitch width, and outer circumference length) of the obtained V-belt were the same as those in Example 1.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 9.1, and the belt lateral rigidity (P) was 1500 N/mm.

[Comparative Example 1]

(V-belt)

A belt sleeve (crosslinked sleeve) having a thickness of 8 mm was produced using the same used materials as in Example 1 except that a rubber composition of a compression rubber sheet (un-crosslinked rubber sheet) was changed to C3 (rubber hardness after crosslinking: 93°), and a V-belt (raw-edge cogged V-belt) was obtained. The dimensions (thickness, pitch width, and outer circumference length) of the obtained V-belt were the same as those in Example 1.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 9.1, and the belt lateral rigidity (P) was 1000 N/mm.

[Comparative Example 2]

(V-belt)

A belt sleeve (crosslinked sleeve) having a thickness of 8 mm was produced using the same used materials as in Example 1 except that a rubber composition of a compression rubber sheet (un-crosslinked rubber sheet) was changed to C5 (rubber hardness after crosslinking: 97°), and a V-belt (raw-edge cogged V-belt) was obtained. The dimensions (thickness, pitch width, and outer circumference length) of the obtained V-belt were the same as those in Example 1.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 9.1, and the belt lateral rigidity (P) was 2700 N/mm.

[Example 4]

(V-belt)

A belt sleeve (crosslinked sleeve) having a thickness of 7 mm was produced using the same used materials as in Comparative Example 2 except that a thickness of a compression rubber sheet (un-crosslinked rubber sheet) and a thickness of a tension rubber sheet (un-crosslinked rubber sheet) were changed (thinner by 0.5 mm), and a V-belt (raw-edge cogged V-belt) was obtained. The obtained V-belt had a belt thickness (H) of 7 mm (among them, a height of a cog ridge is 4 mm), a belt pitch width (Wp) of 9.3 mm, and a belt outer circumference length (BOC) of 397 mm.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 10, and the belt lateral rigidity (P) was 2200 N/mm.

[Comparative Example 3]

(V-belt)

A belt sleeve (crosslinked sleeve) having a thickness of 6 mm was produced using the same used materials as in Example 1 except that a thickness of a compression rubber sheet (un-crosslinked rubber sheet) was changed (thinner by 0.5 mm) and a thickness of a tension rubber sheet (un-crosslinked rubber sheet) was changed (thinner by 1.0 mm), and a V-belt (raw-edge cogged V-belt) was obtained. The obtained V-belt had a belt thickness (H) of 6 mm (among them, the height of the cog ridge is 3 mm), a belt pitch width (Wp) of 9.3 mm, and a belt outer circumference length (BOC) of 397 mm.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 12, and the belt lateral rigidity (P) was 800 N/mm.

[Example 5]

(V-belt)

A belt sleeve (crosslinked sleeve) having a thickness of 7 mm was produced using the same used materials as in Example 1 except that a thickness of a compression rubber sheet (un-crosslinked rubber sheet) and a thickness of a tension rubber sheet (un-crosslinked rubber sheet) were changed (thinner by 0.5 mm), and a V-belt (raw-edge cogged V-belt) was obtained. The obtained V-belt had a belt thickness (H) of 7 mm (among them, a height of a cog ridge is 4 mm), a belt pitch width (Wp) of 9.3 mm, and a belt outer circumference length (BOC) of 397 mm.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 10, and the belt lateral rigidity (P) was 1500 N/mm.

[Example 6]

(V-belt)

A belt sleeve (crosslinked sleeve) having a thickness of 9 mm was produced using the same used materials as in Example 1 except that a thickness of a compression rubber sheet (un-crosslinked rubber sheet) was changed (thicker by 1 mm), and a V-belt (raw-edge cogged V-belt) was obtained. The dimensions of the obtained V-belt were the same as those in Example 1 (pitch width, outer circumference length) except that the belt thickness (H) was changed to 9 mm (among them, a height of a cog ridge was 4 mm).

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 8.1, and the belt lateral rigidity (P) was 2500 N/mm.

[Comparative Example 4]

(V-belt)

A belt sleeve (crosslinked sleeve) having a thickness of 9 mm was produced using the same used materials as in Example 6 except that a rubber composition of a compression rubber sheet (un-crosslinked rubber sheet) was changed to C5 (rubber hardness after crosslinking: 97°), and a V-belt (raw-edge cogged V-belt) was obtained. The dimensions (thickness, pitch width, and outer circumference length) of the obtained V-belt were the same as those in Example 6.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 8.1, and the belt lateral rigidity (P) was 3000 N/mm.

[Example 7]

(V-belt)

A belt sleeve (crosslinked sleeve) having a thickness of 9 mm was produced using the same used materials as in Example 6 except that a rubber composition of a compression rubber sheet (un-crosslinked rubber sheet) was changed to C3 (rubber hardness after crosslinking: 93°), and a V-belt (raw-edge cogged V-belt) was obtained. The dimensions (thickness, pitch width, and outer circumference length) of the obtained V-belt were the same as those in Example 6.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 8.1, and the belt lateral rigidity (P) was 1500 N/mm.

[Comparative Example 5]

(V-belt)

A belt sleeve (crosslinked sleeve) having a thickness of 9 mm was produced using the same used materials as in Example 7 except that the cord was changed to A2 (PET cord), and a V-belt (raw-edge cogged V-belt) was obtained. The dimensions (thickness, pitch width, and outer circumference length) of the obtained V-belt were the same as those in Example 7.

(Driving Pulley and Driven Pulley)

Dimensions (minimum pitch diameter, maximum pitch diameter, and inter-axis distance) are the same as those in Example 1.

(LT Coefficient and Belt Lateral Rigidity)

As a result, the LT coefficient of the V-belt with respect to the driving pulley was 8.1, and the belt lateral rigidity (P) was 1100 N/mm.

[Comparative Example 6]

(V-belt)

A belt sleeve (crosslinked sleeve) having a thickness of 8 mm was produced using the same used materials as in Comparative Example 2 (aramid cord, hardness of compression rubber layer: 97°), and a V-belt (raw-edge cogged V-belt) was obtained. The dimensions (thickness, pitch width, and outer circumference length) of the obtained V-belt were the same as those in Comparative Example 2.

(Driving Pulley and Driven Pulley)

In contrast to Comparative Example 2, the maximum pitch diameter (d2) of 80 mm was not changed, and the minimum pitch diameter (d1) was changed to 40 mm, and as a result of using the above V-belt, the inter-axis distance is 97 mm.

(LT Coefficient and Belt Lateral Rigidity)

As a result, the LT coefficient of the V-belt with respect to the driving pulley was 12, and the belt lateral rigidity (P) was 2700 N/mm.

[Example 8]

(V-belt)

A belt sleeve (crosslinked sleeve) having a thickness of 8 mm was produced using the same used materials as in Comparative Example 6 except that the cord was changed to A2 (PET cord), and a V-belt (raw-edge cogged V-belt) was obtained. The dimensions (thickness, pitch width, and outer circumference length) of the obtained V-belt were the same as those in Comparative Example 6.

(Driving Pulley and Driven Pulley)

Dimensions (minimum pitch diameter, maximum pitch diameter, and inter-axis distance) are the same as those in Comparative Example 6.

(LT Coefficient and Belt Lateral Rigidity)

As a result, the LT coefficient of the V-belt with respect to the driving pulley was 12, and the belt lateral rigidity (P) was 2500 N/mm.

[Example 9]

(V-belt)

A belt sleeve (crosslinked sleeve) having a thickness of 8 mm was produced using the same used materials as in Example 8 except that a hardness of the compression rubber layer was changed to 95°, and a V-belt (raw-edge cogged V-belt) was obtained. The dimensions (thickness, pitch width, and outer circumference length) of the obtained V-belt were the same as those in Example 8.

(Driving Pulley and Driven Pulley)

Dimensions (minimum pitch diameter, maximum pitch diameter, and inter-axis distance) are the same as those in Example 8.

(LT Coefficient and Belt Lateral Rigidity)

As a result, the LT coefficient of the V-belt with respect to the driving pulley was 12, and the belt lateral rigidity (P) was 1500 N/mm.

[Comparative Example 7]

(V-belt)

A belt sleeve (crosslinked sleeve) having a thickness of 8 mm was produced using the same used materials as in Comparative Example 6 except that a rubber composition of a compression rubber sheet (un-crosslinked rubber sheet) was changed to C3 (rubber hardness after crosslinking: 93°), and a V-belt (raw-edge cogged V-belt) was obtained. The dimensions (thickness, pitch width, and outer circumference length) of the obtained V-belt were the same as those in Comparative Example 6.

(Driving Pulley and Driven Pulley)

Dimensions (minimum pitch diameter, maximum pitch diameter, and inter-axis distance) are the same as those in Comparative Example 6.

(LT Coefficient and Belt Lateral Rigidity)

As a result, the LT coefficient of the V-belt with respect to the driving pulley was 12, and the belt lateral rigidity (P) was 1000 N/mm.

[Reference Example 1]

A V-belt, a driving pulley, and a driven pulley were produced by using a representative example of a belt system (belt thickness is 8 mm which is the same as that in Example 1) provided in a continuously variable transmission for a small scooter, not for a bicycle, as Reference Example 1 to compare with Example 1.

(V-belt)

A belt sleeve (crosslinked sleeve) having a thickness of 8 mm was produced using the same used materials as in Example 1 except that a cord was changed to A2 (PET cord) and each rubber composition of a compression rubber sheet (un-crosslinked rubber sheet) and a tension rubber sheet (un-crosslinked rubber sheet) was changed to C2 (rubber hardness after crosslinking: 89°), and a V-belt (raw-edge cogged V-belt) was obtained. The obtained V-belt had a belt thickness (H) of 8 mm, a belt pitch width (Wp) of 18.9 mm, and a belt outer circumference length (BOC) of 750 mm.

(Driving Pulley and Driven Pulley)

A minimum pitch diameter (d1) was set to 55 mm, a maximum pitch diameter (d2) was set to 120 mm, and an inter-axis distance was 229 mm as a result of using the above V-belt.

(LT Coefficient and Belt Lateral Rigidity)

As a result, the LT coefficient of the V-belt with respect to the driving pulley was 5.9, and the belt lateral rigidity (P) was 600 N/mm.

[Evaluation of Belt system: Item, Method, Standard]

For the respective test pieces shown in Tables 5 to 11, compactness, power-transmission performance (slip ratio), and durability performance were verified in order to determine whether a belt system (particularly, V-belt) capable of solving the problem of the present application was obtained.

[Compactness]

(Determination Criteria)

Whether the belt system is compact can be determined from the viewpoint of whether the belt system can be formed to be compact so as to be mountable on a bicycle continuously variable transmission that is specially designed for use in a bicycle in consideration of restrictions on space and weight.

As determination of compactness, in a case where the following conditions (a) to (c) relating to the dimensions of the respective parts of the "driving pulley and the driven pulley" were all satisfied and all of the following conditions (d1) and (e) to (f) relating to the dimensions of the respective parts of the "V-belt" were satisfied by using the dimensions of the respective parts of the belt system as an index, it was evaluated that the belt system can be formed to be compact so as to be able to be mounted on the bicycle continuously variable transmission, and the compactness was determined as a.

When all of the following conditions (a) to (c) relating to the dimensions of the respective parts of the "driving pulley and the driven pulley" were satisfied and all of the following conditions (d2) and (e) to (f) relating to the dimensions of the respective parts of the "V-belt" were satisfied, it was evaluated as slightly inferior from the viewpoint that the belt system is formed to be compact so as to be able to be mounted on the bicycle continuously variable transmission, and the compactness was determined as b.

When at least one of the following conditions (a) to (c) relating to the dimensions of the respective parts of the "driving pulley and the driven pulley" and the following conditions (d2) and (e) to (f) relating to the dimensions of the respective parts of the "V-belt" was not satisfied, and the following condition (d1) relating to the dimensions of the respective parts of the "V-belt" was not satisfied, it was evaluated that the belt system cannot be formed to be compact so as to be able to be mounted on the bicycle continuously variable transmission, and the compactness was determined as c.

From the viewpoint of suitability (compactness of the belt system) for actual use in this application, the belt systems determined as "a" or "b" were regarded as acceptable-level.

Dimensions of Each Portion of "Driving Pulley and Driven Pulley"

  (a) Minimum pitch diameter (d1): 40 mm to 45 mm
  (b) Maximum pitch diameter (d2): 70 mm to 80 mm
  (c) Inter-axis distance: 90 mm to 200 mm
  Dimensions of Each Portion of "V-Belt"
  (d1) Belt thickness (H): 6 mm to 8 mm
  (d2) Belt thickness (H): more than 8 mm and 9 mm or less
  (e) Pitch width (Wp): 9 mm to 14 mm
  (f) Outer circumference length (BOC): 360 mm to 610 mm

[Power-Transmission Performance (Slip Ratio)]

(Test name) Power-Transmission Performance (Slip Ratio) Measurement Test

(Tester)

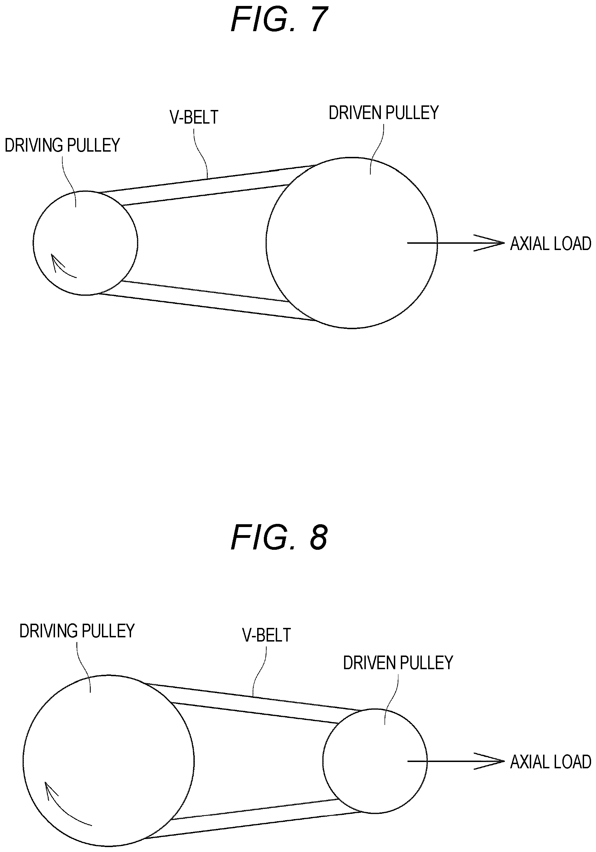

In the test, a biaxial running tester having a pulley layout illustrated in FIG. 7 was used.

The tester includes a driving pulley and a driven pulley having the same width (fixed) of the V-grooves but different outer diameters, and is configured to be able to measure power-transmission performance (slip ratio) under a shifting condition in which a pitch diameter of the driving pulley is the minimum (d1 in Tables 5 to 11) and a pitch diameter of the driven pulley is the maximum (d2 in Tables 5 to 11) (that is, under a usage condition in which the torque becomes a maximum torque in a state of being shifted to the lowest speed side) under a predetermined inter-axis distance (described in Tables 5 to 11).

(Test Method)

Before and after the durability performance test to be described later, a power-transmission performance (slip ratio) measurement test was performed by the following method.
First, the V-belt of the respective test pieces was wound to be fitted between the V-grooves of the driving pulley and the driven pulley. In a state where an inter-axis distance was set to a predetermined distance (described in Tables 5 to 11) at room temperature and an axial load of 600N (constant) was applied to a drive shaft, the V-belt was caused to run from an unloaded state at a rotation speed of 2000 rpm (constant) of the drive shaft, and a rotation speed (rpm) of the driven pulley in a state where the maximum torque (load) of 10 Nm was input to the drive shaft immediately after running was measured by a detector, thereby calculating a slip ratio according to the following equation.
Rotation speeds of the driving pulley and the driven pulley under no load and a rotation speed of the driving pulley under load in the measurement are shown in Table 4.

$$\text{Slip Ratio (\%)} = [(K2 - K1)/K1] \times 100$$

[In the equation, K1 = R1/N1 and K2 = R2/N2, where R1 represents the rotation speed (rpm) of the driving pulley during unloaded operation, N1 represents the rotation speed (rpm) of the driven pulley during unloaded operation, R2 represents the rotation speed (rpm) of the driving pulley during loaded operation, and N2 represents the rotation speed (rpm) of the driven pulley during loaded operation]

Table 4

| | |
|---|---|
| Rotation speed (R1) of driving pulley under no load | 2000 rpm |
| Rotation speed (R2) of driving pulley under load | 2000 rpm |
| Rotation speed (N1) of driven pulley under no load | 1111 rpm |

(Determination Criteria)

As the determination of the power-transmission performance of the belt, a value of a slip ratio was used as an index (the smaller the value of the slip ratio, the more the slip is prevented and the necessary transmission capability can be secured),

in a case where the value of the slip ratio [the larger value before and after running (before running and after 400 Hr running)] (%) was 3.5% or less, the power-transmission performance was determined as a,
in a case where the value of the slip ratio was more than 3.5% and 5% or less, the power-transmission performance was determined as b, and
in a case where the value of the slip ratio was more than 5%, or in a case where measurement under a predetermined load was not possible (measurement was impossible) in a state where before a predetermined maximum torque (load) was input to the drive shaft, the entire surface was already slipped (full slip state), the power-transmission performance was determined as c.

From the viewpoint of suitability (power-transmission performance of V-belt) for actual use in this application, the belts determined as "a" or "b" were regarded as acceptable-level belts.
When the power-transmission performance (slip ratio) measured before running in the durability performance test to be described later was determined as "c", the durability performance test was not performed.

[Durability Performance]

(Test Name) Durability Performance Test

(Tester)

In the test, a biaxial running tester having a pulley layout illustrated in FIG. 8 was used.

The tester includes a driving pulley and a driven pulley having the same width (fixed) of the V-grooves but different outer diameters, and is configured to be able to confirm durability performance (presence or absence of failure of the belt) under a shifting condition in which a pitch diameter of the driving pulley is the maximum ($d2$ in Tables 5 to 11) and a pitch diameter of the driven pulley is the minimum ($d1$ in Tables 5 to 11) (that is, under a usage condition in which the torque becomes a minimum torque in a state of being shifted to the highest speed side) under a predetermined inter-axis distance (described in Tables 5 to 11).

(Test Method)

The V-belt of the respective test pieces was wound to be fitted between the V-grooves of the driving pulley and the driven pulley. In a state where the inter-axis distance was set to a predetermined distance (described in Tables 5 to 11) and an axial load of 400 N (constant) was applied to the driven shaft at room temperature, the V-belt was caused to run for 400 hours [corresponding to an actual running distance 10,000 km (bicycle at a speed of 25 km/h)] in a state where the torque (load) of 2 Nm was input to the drive shaft and a rotation speed of the drive shaft is 2000 rpm (constant), the belt was visually observed, and the presence or absence of an abnormality such as a crack (particularly, a crack in a cog valley portion) or peeling and a time until the belt was broken were evaluated according to the following criteria.

(Determination Criteria)

As the determination of the durability performance of the belt,

in a case where the belt was completely run for 400 Hr and an abnormality such as a crack or peeling was not observed, the durability performance was determined as a,
in a case where the belt was completely run for 400 Hr and a slight crack or peeling was observed (to the extent that the performance was not affected), the durability performance was determined as b,
in a case where an abnormality (crack or peeling) to such an extent that the performance was affected occurred during running or at the time of completion of running for 400 Hr and the belt was broken, the durability performance was determined as c.

From the viewpoint of suitability (durability performance of V-belt) for actual use in this application, the belts determined as "a" or "b" were regarded as acceptable-level.

(Comprehensive Determination)

Criteria of the comprehensive determination (ranking) of a belt system capable of solving the present problem are as follows based on the results of the determination in the three evaluation items (compactness, power-transmission performance (slip ratio), and durability performance).

Rank A: The case where all of the above evaluation items were determined as "a" was judged that there was no problem in practical use, and was rated as the best rank.
Rank B: In the above evaluation items, when there was no determination c but even one evaluation item was determined as b, there was no problem in practical use, but it was ranked as slightly inferior.
Rank C: When even one of the evaluation items was determined as c, it was given a rank (fail) which is insufficient as a solution to the present problem.

[Verification Results]

Verification results are shown in Tables 5 to 11.

In the following comparison and verification between the test pieces, since it is known that an influence on the belt lateral rigidity and belt performance [power-transmission performance (slip ratio) and durability performance] is relatively small, the conditions shown below are fixed (constant) conditions without changing a level.

(Fixed Conditions)

[V-Belt]

Hardness of Adhesion Rubber Layer, Hardness of Tension Rubber Layer, Belt Pitch Width, and Belt Outer Circumference Length

[Driving Pulley and Driven Pulley]

Maximum Pitch Diameter and Inter-axis Distance

Table 5 (Comparison in which minimum pitch diameter of pulley is changed)

| | | | | Example | Example |
|---|---|---|---|---|---|
| | | | | 2 | 1 |
| V-belt | Cord | | Cord type | A1 (Aramid) | |
| | Adhesion rubber layer | | Rubber composition | C1 | |
| | | | Hardness Hs (°) | 82 | |
| | Tension rubber layer | | Rubber composition | C3 | |
| | | | Hardness Hs (°) | 93 | |
| | Compression rubber layer | | Rubber composition | C4 | |
| | | | Hardness Hs (°) | 95 | |
| | Belt dimension | | Belt thickness H (mm) | 8 | |
| | | | Belt pitch width Wp (mm) | 9.3 | |
| | | | Belt outer circumference length BOC (mm) | 400 | |
| Driving pulley, driven pulley | | | Minimum pitch diameter d1 (mm) | 40 | 45 |
| | | | Maximum pitch diameter d2 (mm) | 80 | |
| | | | Inter-axis distance (mm) | 97 | 94 |
| Maximum torque Tmax (Nm) | | | | 10 | |
| LT coefficient (-) | | | | 12 | 9.1 |
| Belt lateral rigidity P (N/mm) | | | | 2,000 | 2,000 |
| Evaluation of belt system | Compactness | | Determination | a | a |
| | Belt power-transmission performance (slip ratio) (%) | | Before durable running | 4.3 | 3.5 |
| | | | After durable running | 4.1 | 3.3 |
| | | | Determination | b | a |
| | Belt durability performance | | Presence or absence of abnormality of V-belt | Absence | Absence |
| | | | Time until damage (Hr) | Complete | Complete |
| | | | Determination | a | a |
| Comprehensive determination (rank) | | | | B | A |

(Examples 1 and 2)

In a belt system using a V-belt in which a cord of an aramid fiber was used and a hardness of a compression rubber layer was 95° and a belt thickness was 8 mm, a minimum pitch diameter of a pulley was changed and compared.
The minimum pitch diameter of the pulley satisfying both the compactness (restriction of space) and an allowable range on a variable speed belt system is limited to a range of 40 mm to 45 mm as the usage conditions (premise). In this range, as the minimum pitch diameter of the pulley increases, the LT coefficient decreases and the slip ratio tends to decrease. Since the V-belts in both examples (Examples 1 and 2) had the same configuration, there was no difference in the belt lateral rigidity (2000 N/mm) in both examples, and under these conditions, the belt performance (power-transmission performance (slip ratio) and durability performance) of a predetermined level (acceptable-level) could be secured (determined as a or determined as b).

Specifically, in a case where the minimum pitch diameter of the pulley was 45 mm (Example 1), both the power-transmission performance (slip ratio) and the durability performance were determined as a (rank A in the comprehensive determination), in a case where the minimum pitch diameter of the pulley was 40 mm (Example 2), the durability performance was determined as a which was equivalent to that in the case where the minimum pitch diameter of the pulley was 45 mm (Example 1), but the LT coefficient was slightly larger at 12, and thus the power-transmission performance (slip ratio) was determined as b (rank B in the comprehensive determination).

From the above results, it can be said that the minimum pitch diameter of the pulley is preferably in the range of 40 mm to 45 mm, and most preferably 45 mm from the viewpoint of achieving both compactness and belt performance [power-transmission performance (slip ratio) and durability performance].

Table 6 (Comparison in which cord type (material of filament) was changed)

| | | | Example | Example |
|---|---|---|---|---|
| | | | 1 | 3 |
| V-belt | Cord | Cord type | A1 (Aramid) | A2 (PET) |
| | Adhesion rubber layer | Rubber composition | C1 | |
| | | Hardness Hs (°) | 82 | |
| | Tension rubber layer | Rubber composition | C3 | |
| | | Hardness Hs (°) | 93 | |
| | Compression rubber layer | Rubber composition | C4 | |
| | | Hardness Hs (°) | 95 | |
| | Belt dimension | Belt thickness H (mm) | 8 | |
| | | Belt pitch width Wp (mm) | 9.3 | |
| | | Belt outer circumference length BOC (mm) | 400 | |
| Driving pulley, driven pulley | | Minimum pitch diameter d1 (mm) | 45 | |
| | | Maximum pitch diameter d2 (mm) | 80 | |
| | | Inter-axis distance (mm) | 94 | |
| Maximum torque Tmax (Nm) | | | 10 | |
| LT coefficient (-) | | | 9.1 | 9.1 |
| Belt lateral rigidity P (N/mm) | | | 2,000 | 1,500 |
| Evaluation of belt system | Compactness | Determination | a | a |
| | Belt power-transmission performance (slip ratio) (%) | Before durable running | 3.5 | 3.9 |
| | | After durable running | 3.3 | 3.7 |
| | | Determination | a | b |
| | Belt durability performance | Presence or absence of abnormality of V-belt | Absence | Absence |
| | | Time until damage (Hr) | Complete | Complete |
| | | Determination | a | a |
| Comprehensive determination (rank) | | | A | B |

(Examples 1 and 3)

Based on a belt system (hardness of a compression rubber layer: 95°, belt thickness: 8 mm, minimum pitch diameter of a pulley: 45 mm) according to Example 1, fibers (aramid fibers) constituting a cord were changed and compared.

In Example 3 in which the PET cord (index 43) having a lower tensile elastic modulus than an aramid cord was used, the durability performance was determined as a which was equivalent to that in the case of using the aramid cord (Example 1), but since the belt lateral rigidity was slightly decreased, the power-transmission performance (slip ratio) was determined as b (rank B in the comprehensive determination).

Table 7 (Comparison in which hardness of compression rubber layer was changed)

| | | | Comparative Example | Example | Comparative Example | Example |
|---|---|---|---|---|---|---|
| | | | 1 | 1 | 2 | 4 |
| V-belt | Cord | Cord type | A1 (Aramid) | | | |
| | Adhesion rubber layer | Rubber composition | C1 | | | |
| | | Hardness Hs (°) | 82 | | | |
| | Tension rubber layer | Rubber composition | C3 | | | |
| | | Hardness Hs (°) | 93 | | | |
| | Compression rubber layer | Rubber composition | C3 | C4 | C5 | C5 |
| | | Hardness Hs (°) | 93 | 95 | 97 | 97 |
| | Belt dimension | Belt thickness H (mm) | 8 | | | 7 |
| | | Belt pitch width Wp (mm) | 9.3 | | | |
| | | Belt outer circumference length BOC (mm) | 400 | | | 397 |
| Driving pulley, driven pulley | | Minimum pitch diameter d1 (mm) | 45 | | | |
| | | Maximum pitch diameter d2 (mm) | 80 | | | |
| | | Inter-axis distance (mm) | 94 | | | |
| Maximum torque Tmax (Nm) | | | 10 | | | |
| LT coefficient (-) | | | 9.1 | 9.1 | 9.1 | 10 |
| Belt lateral rigidity P (N/mm) | | | 1,000 | 2,000 | 2,700 | 2,200 |

(continued)

| | | | Comparative Example | Example | Comparative Example | Example |
|---|---|---|---|---|---|---|
| | | | 1 | 1 | 2 | 4 |
| Evaluation of belt system | Compactness | Determination | a | a | a | a |
| | Belt power-transmission performance (slip ratio) (%) | Before durable running | Unmeasurable (total slip at 8 Nm) | 3.5 | 2.8 | 3.2 |
| | | After durable running | - | 3.3 | 2.6 | 3.0 |
| | | Determination | c | a | a | a |
| | Belt durability performance | Presence or absence of abnormality of V-belt | - | Absence | Crack | Absence |
| | | Time until damage (Hr) | - | Complete | 380 | Complete |
| | | Determination | - | a | c | a |
| Comprehensive determination (rank) | | | C | A | C | A |

(Examples 1 and 4 and Comparative Examples 1 and 2)

Based on the belt system (aramid cord, belt thickness: 8 mm, minimum pitch diameter of the pulley: 45 mm) in Example 1, hardness 95° of a compression rubber layer was changed and compared.

As the hardness of the compression rubber layer increased, the belt lateral rigidity increased and the slip ratio decreased, but when the belt lateral rigidity was too large, the durability performance (crack resistance) tended to deteriorate.

Specifically, in Comparative Example 1 in which the hardness of the compression rubber layer was reduced to 93°, the belt lateral rigidity was as too small as 1000 N/mm as compared with Example 1, and the power-transmission performance (slip ratio) before the durable running was unmeasurable [state where the belt entirely slipped before a maximum torque of a predetermined value (10 Nm) was input to the drive shaft (with a torque of 8 Nm)], and the power-transmission performance was determined as c (rank C in the comprehensive determination). In Comparative Example 2 in which the hardness of the compression rubber layer was increased to 97° (upper limit level of the rubber hardness satisfying the production quality of the belt) as compared with Example 1, the power-transmission performance (slip ratio) was determined as a, but the belt lateral rigidity was too large as 2700 N / mm, and the bendability of the belt was excessively lowered, and therefore, a crack (cog valley portion) occurred during running, and the durability performance was determined as c (rank C in the comprehensive determination).

The durability performance (in particular, crack resistance) of the belt depends on the bendability of the belt (the better the bendability is, the better the crack resistance is), and the belt thickness also affects the bendability of the belt.

Therefore, in order to confirm the influence thereof, in Example 4 in which the belt thickness was reduced to 7 mm under a condition that the hardness of the compression rubber layer was constant at 97° with respect to the V-belt in Comparative Example 2, but probably since the bendability of the belt was slightly improved, the durability performance was determined as a (rank A in the comprehensive determination), which is equivalent to that in Example 1.

From the above results, it can be said that a preferable range of the hardness of the compression rubber layer of the V-belt is 95° or more and 97° or less from the viewpoint of ensuring the belt performance [power-transmission performance (slip ratio) and durability performance].

Table 8 (Comparison in which belt thickness is changed)

| | | | Comparative Example | Example | Example | Example |
|---|---|---|---|---|---|---|
| | | | 3 | 5 | 1 | 6 |
| | Cord | Cord type | A1 (Aramid) | | | |

(continued)

| | | | Comparative Example 3 | Example 5 | Example 1 | Example 6 |
|---|---|---|---|---|---|---|
| V-belt | Adhesion rubber layer | Rubber composition | C1 | | | |
| | | Hardness Hs (°) | 82 | | | |
| | Tension rubber layer | Rubber composition | C3 | | | |
| | | Hardness Hs (°) | 93 | | | |
| | Compression rubber layer | Rubber composition | C4 | | | |
| | | Hardness Hs (°) | 95 | | | |
| | Belt dimension | Belt thickness H (mm) | 6 | 7 | 8 | 9 |
| | | Belt pitch width Wp (mm) | 9.3 | | | |
| | | Belt outer circumference length BOC (mm) | 397 | | 400 | |
| Driving pulley, driven pulley | | Minimum pitch diameter d1 (mm) | 45 | | | |
| | | Maximum pitch diameter d2 (mm) | 80 | | | |
| | | Inter-axis distance (mm) | 94 | | | |
| Maximum torque Tmax (Nm) | | | 10 | | | |
| LT coefficient (-) | | | 12 | 10 | 9.1 | 8.1 |
| Belt lateral rigidity P (N/mm) | | | 800 | 1,500 | 2,000 | 2,500 |
| Evaluation of belt system | Compactness | Determination | a | a | a | b |
| | Belt power-transmission performance (slip ratio) (%) | Before durable running | Unmeasurable (total slip at 8 Nm) | 3.8 | 3.5 | 3.1 |
| | | After durable running | - | 3.6 | 3.3 | 2.9 |
| | | Determination | c | b | a | a |
| | Belt durability performance | Presence or absence of abnormality of V-belt | - | Absence | Absence | Absence |
| | | Time until damage (Hr) | - | Complete | Complete | Complete |
| | | Determination | - | a | a | a |
| Comprehensive determination (rank) | | | C | B | A | B |

(Examples 1, 5, and 6 and Comparative Example 3)

Based on the belt system (aramid cord, hardness of compression rubber layer: 95°, minimum pitch diameter of pulley: 45 mm) in Example 1, the belt thickness 8 mm was changed and compared.

As the belt thickness was increased, the compactness was impaired, but the LT coefficient tended to be decreased, the belt lateral rigidity tended to be increased, and the slip ratio tended to be decreased.

Specifically, in Example 5 in which the belt thickness was reduced to 7 mm as compared with Example 1, the power-transmission performance (slip ratio) was determined as b, and the durability performance was determined as a, and the comprehensive determination was rank B, which is an acceptable-level. In Comparative Example 3 in which the belt thickness was reduced to 6 mm, the LT coefficient was 12, the belt lateral rigidity was too small as 800 N/mm, the power-transmission performance (slip ratio) before the durable running was not measurable (state where the belt entirely slipped with a torque of 8 Nm), and the power-transmission performance was determined as c (rank C in the comprehensive determination).

In Example 6 in which the belt thickness was increased to 9 mm as compared with Example 1, the compactness was determined as b, but the LT coefficient decreased to 8.1, the belt lateral rigidity increased to 2500 N/mm, and both the power-transmission performance (slip ratio) and the durability performance were determined as a (rank B in the comprehensive determination).

From the above results, it can be said that the belt thickness is preferably in the range of 7 to 9 mm, more preferably in the range of 7 mm to 8 mm, and most preferably 8 mm from the viewpoint of achieving both compactness and belt performance [power-transmission performance (slip ratio) and durability performance].

Table 9 (Comparison between conditions in which LT coefficient becomes level of 8)

| | | | Comparative Example | Example | Example | Comparative Example |
|---|---|---|---|---|---|---|
| | | | 4 | 6 | 7 | 5 |
| V-belt | Cord | Cord type | A1 (Aramid) | | | A2 (PET) |
| | Adhesion rubber layer | Rubber composition | C1 | | | |
| | | Hardness Hs (°) | 82 | | | |
| | Tension rubber layer | Rubber composition | C3 | | | |
| | | Hardness Hs (°) | 93 | | | |
| | Compression rubber layer | Rubber composition | C5 | C4 | C3 | |
| | | Hardness Hs (°) | 97 | 95 | 93 | |
| | Belt dimension | Belt thickness H (mm) | 9 | | | |
| | | Belt pitch width Wp (mm) | 9.3 | | | |
| | | Belt outer circumference length BOC (mm) | 400 | | | |
| Driving pulley, driven pulley | | Minimum pitch diameter d1 (mm) | 45 | | | |
| | | Maximum pitch diameter d2 (mm) | 80 | | | |
| | | Inter-axis distance (mm) | 94 | | | |
| Maximum torque Tmax (Nm) | | | 10 | | | |
| LT coefficient (-) | | | 8.1 | 8.1 | 8.1 | 8.1 |
| Belt lateral rigidity P (N/mm) | | | 3,000 | 2,500 | 1,500 | 1,100 |

(continued)

| | | | Comparative Example | Example | Example | Comparative Example |
|---|---|---|---|---|---|---|
| | | | 4 | 6 | 7 | 5 |
| Evaluation of belt system | Compactness | Determination | b | b | b | b |
| | Belt power-transmission performance (slip ratio) (%) | Before durable running | 2.7 | 3.1 | 4.1 | Unmeasurable (total slip at 8 Nm) |
| | | After durable running | 2.5 | 2.9 | 3.8 | - |
| | | Determination | a | a | b | c |
| | Belt durability performance | Presence or absence of abnormality of V-belt | Crack | Absence | Absence | - |
| | | Time until damage (Hr) | 320 | Complete | Complete | - |
| | | Determination | c | a | a | - |
| Comprehensive determination (rank) | | | C | B | B | C |

(Examples 6 and 7 and Comparative Examples 4 and 5)

Furthermore, in addition to Example 6, an influence on the belt performance was confirmed under other conditions (conditions in which the belt thickness was 9 mm, and the minimum pitch diameter of the pulley was 45 mm) in which the LT coefficient was 8.

Comparative Example 4 is an example in which the hardness of the compression rubber layer is increased to 97° with respect to the belt system (aramid cord, belt thickness: 9 mm, minimum pitch diameter of pulley: 45 mm) in Example 6, the belt lateral rigidity is too large as 3000 N/mm at the same LT coefficient level of 8, and the power-transmission performance (slip ratio) is determined as a at the same level, but probably since the bendability of the belt is excessively reduced, the durability performance is determined as c, that is, the comprehensive determination is rank C.

Example 7 is an example in which the hardness of the compression rubber layer was lowered to 93° as compared with Example 6, but since the belt lateral rigidity was lowered to 1500 N/mm at the same LT coefficient level of 8, the value of the slip ratio was increased, and the power-transmission performance was determined as b, however, since the bendability of the belt is good, the durability performance was determined as a (rank B), which is the same as the above.

Comparative Example 5 is an example in which the cord was changed to a PET cord as compared with Example 7, but the belt lateral rigidity was too small as 1100 N/mm at the same LT coefficient level of 8, and the power-transmission performance (slip ratio) before the durable running was unmeasurable (state where the belt entirely slipped with a torque of 8 Nm) and was determined as c (rank C in the comprehensive determination).

From the above results, it can be said that the belt performance [power-transmission performance (slip ratio), durability performance] can be secured as long as the belt lateral rigidity is secured in the range of 1500 to 2500 N/mm, even if the LT coefficient is too large as 8, as compared with the case of a small scooter (LT coefficient is about 4 to 8).

Table 10 (Comparison between conditions in which LT coefficient becomes level of 12)

| | | | Comparative Example | Example | Example | Comparative Example |
|---|---|---|---|---|---|---|
| | | | 6 | 8 | 9 | 7 |
| | Cord | Cord type | A1 (Aramid) | A2 (PET) | | A1 (Aramid) |
| | Adhesion rubber layer | Rubber composition | C1 | | | |
| | | Hardness Hs (°) | 82 | | | |

(continued)

| | | | Comparative Example | Example | Example | Comparative Example |
|---|---|---|---|---|---|---|
| | | | 6 | 8 | 9 | 7 |
| V-belt | Tension rubber layer | Rubber composition | C3 | | | |
| | | Hardness Hs (°) | 93 | | | |
| | Compression rubber layer | Rubber composition | C5 | | C4 | C3 |
| | | Hardness Hs (°) | 97 | | 95 | 93 |
| | Belt dimension | Belt thickness H (mm) | 8 | | | |
| | | Belt pitch width Wp (mm) | 9.3 | | | |
| | | Belt outer circumference length BOC (mm) | 400 | | | |
| Driving pulley, driven pulley | | Minimum pitch diameter d1 (mm) | 40 | | | |
| | | Maximum pitch diameter d2 (mm) | 80 | | | |
| | | Inter-axis distance (mm) | 97 | | | |
| Maximum torque Tmax (Nm) | | | 10 | | | |
| LT coefficient (-) | | | 12 | 12 | 12 | 12 |
| Belt lateral rigidity P (N/mm) | | | 2,700 | 2,500 | 1,500 | 1,000 |
| Evaluation of belt system | Compactness | Determination | a | a | a | a |
| | Belt power-transmission performance (slip ratio) (%) | Before durable running | 3.8 | 4.0 | 4.8 | Unmeasurable (total slip at 8 Nm) |
| | | After durable running | 3.6 | 3.8 | 4.6 | - |
| | | Determination | b | b | b | c |
| | Belt durability performance | Presence or absence of abnormality of V-belt | Crack | Somewhat | Absence | - |
| | | Time until damage (Hr) | 360 | Complete | Complete | |
| | | Determination | c | b | a | - |
| Comprehensive determination (rank) | | | C | B | B | C |

(Examples 8 and 9 and Comparative Examples 6 and 7)

Furthermore, in addition to Example 2 and Comparative Example 3, an influence on the belt performance was confirmed under other conditions (constant conditions in which the belt thickness was 8 mm, and the minimum pitch diameter of the pulley was 40 mm) in which the LT coefficient was 12.

Comparative Example 6 is an example in which the minimum pitch diameter of the pulley was reduced to 40 mm without changing the V-belt as compared with the belt system (aramid cord, hardness of compression rubber layer: 97°, belt thickness: 8 mm) in Comparative Example 2, but the LT coefficient was slightly increased to 12 while the belt lateral rigidity was too large as 2700 N/mm, and the power-transmission performance (slip ratio) was determined as b, while the durability performance was determined as c, resulting in rank C.

Example 8 is an example in which the cord was changed to a PET cord as compared with Comparative Example 6, but since the belt lateral rigidity slightly decreased to 2500 N/mm at the same LT coefficient level of 12, the value of the slip ratio increased slightly (transmission performance was determined as b, which is the same), and the durability performance was slightly improved (determined as b) probably due to further improvement in the bendability of the belt, resulting in rank B.

Example 9 is an example in which the hardness of the compression rubber layer was changed to 95° as compared with Example 8, but since the belt lateral rigidity slightly decreased to 1500 N/mm at the same LT coefficient level of 12, the value of the slip ratio increased slightly (transmission performance was determined as b, which is the same), and the durability performance was slightly improved and determined as a, probably due to further improvement in the bendability of the belt, resulting in rank B.

Comparative Example 7 is an example in which the hardness of the compression rubber layer was reduced to 93° as compared with Comparative Example 6, but the belt lateral rigidity was too small as 1000 N/mm at the level of the same LT coefficient of 12, and the power-transmission performance (slip ratio) before the durable running, the measurement was unmeasurable (state where the belt entirely slipped with a torque of 8 Nm) and was determined as c (rank C in the comprehensive determination).

From the above results, it can be said that the belt performance [power-transmission performance (slip ratio), durability performance] can be secured as long as the belt lateral rigidity is secured in the range of 1500 N/mm to 2500 N/mm, even if the LT coefficient is too large as 12, as compared with the case of a small scooter (LT coefficient is about 4 to 8).

Table 11 (Comparison with small scooter)

| | | | Example | Reference Example |
|---|---|---|---|---|
| | | | 1 | 1 |
| V-belt | Cord | Cord type | A1 (Aramid) | A2 (PET) |
| | Adhesion rubber layer | Rubber composition | C1 | |
| | | Hardness Hs (°) | 82 | |
| | Tension rubber layer | Rubber composition | C3 | C2 |
| | | Hardness Hs (°) | 93 | 89 |
| | Compression rubber layer | Rubber composition | C4 | C2 |
| | | Hardness Hs (°) | 95 | 89 |
| | Belt dimension | Belt thickness H (mm) | 8 | |
| | | Belt pitch width Wp (mm) | 9.3 | 18.9 |
| | | Belt outer circumference length BOC (mm) | 400 | 750 |
| Driving pulley, driven pulley | | Minimum pitch diameter d1 (mm) | 45 | 55 |
| | | Maximum pitch diameter d2 (mm) | 80 | 120 |
| | | Inter-axis distance (mm) | 94 | 229 |
| Maximum torque Tmax (Nm) | | | 10 | |
| LT coefficient (-) | | | 9.1 | 5.9 |
| Belt lateral rigidity P (N/mm) | | | 2,000 | 600 |

(continued)

|  |  |  | Example | Reference Example |
|---|---|---|---|---|
|  |  |  | 1 | 1 |
| Evaluation of belt system | Compactness | Determination | a | c |
|  | Belt power-transmission performance (slip ratio) (%) | Before durable running | 3.5 | 2.8 |
|  |  | After durable running | 3.3 | 2.6 |
|  |  | Determination | a | a |
|  | Belt durability performance | Presence or absence of abnormality of V-belt | Absence | Absence |
|  |  | Time until damage (Hr) | Complete | Complete |
|  |  | Determination | a | a |
| Comprehensive determination (rank) |  |  | A | C |

(Example 1 and Reference Example 1)

A representative example of a belt system provided in a continuously variable transmission for a small scooter, which corresponds to the belt system (belt thickness: 8 mm) in Example 1, is referred to as Reference Example 1.

In Reference Example 1 (for a small scooter), since the minimum pitch diameter is as large as 55 mm (furthermore, the maximum pitch diameter is 120 mm, and the inter-axis distance is 229 mm) with respect to the driving pulley and the driven pulley, the LT coefficient in the case where the belt thickness (8 mm) and the maximum torque (10 Nm) are constant is as remarkably small as 5.9, as compared with Example 1 (for a bicycle). Therefore, regarding the V-belt, even when the cord was a PET fiber, the hardness of the compression rubber layer was 89°, and the belt lateral rigidity was too small as 600 N/mm, the belt performance [power-transmission performance (slip ratio), durability performance] was determined as a.

However, the compactness was determined as c, and both the compactness and the belt performance [power-transmission performance (slip ratio), durability performance] could not be achieved at the same time (determined as C).

(Obtained Effects)

From the results of Tables 5 to 11, it can be seen that each of the belt systems in the examples is formed to be compact as compared with a small scooter (the LT coefficient is about 4 to 8) by appropriately designing the V-belt (cord type, hardness of the compression rubber layer, belt thickness, and the like) and the driving pulley and the driven pulley (minimum pitch diameter, maximum pitch diameter, and inter-axis distance) so as to be mountable on a bicycle continuously variable transmission, and has effects that the belt lateral rigidity, which is an index (substitute characteristic) representing the lateral pressure resistance, that is, "difficulty in buckling deformation against an axial load (lateral pressure)" (magnitude of a later-described ride-out change amount) is 1500 N/mm to 2500 N/mm, which is ensured to be a sufficiently high level as compared with the small scooter (belt lateral rigidity is about 300 N/mm to 1500 N/mm), under severe usage conditions (pulley layout and load) in which frictional power-transmission capability is insufficient and a slip between the driving pulley and the V-belt is very likely to be induced under shifting conditions in which the LT coefficient, which is an index (substitute characteristic) indicating easiness of a slip of the belt, is too large as 8 to 12 and a pitch diameter of the driving pulley is minimized (within the range of 40 mm to 45 mm). As a result, not only durability performance (no remarkable abnormality is observed until the end of the target 400 hours, and complete running) is ensured, but also power-transmission performance (slip ratio before and after the durability performance test) is ensured, a slip between a driving pulley (minimum pitch diameter) and a belt is prevented to ensure necessary transmission capability (slip ratio of 5% or less).

Although the present invention has been described in detail with reference to specific embodiments, it is apparent to those skilled in the art that various modifications and changes can be made without departing from the spirit and scope of the present invention.

The present application is based on Japanese Patent Application No. 2022-073123 filed on April 27, 2022 and Japanese Patent Application No. 2023-065626 filed on April 13, 2023, and the content thereof is incorporated herein by reference.

REFERENCE SIGNS LIST

1: belt system
2: driving pulley
21: fixed sheave
22: movable sheave
3: driven pulley
31: fixed sheave
32: movable sheave
4: V-belt (raw-edge cogged V-belt)

**Claims**

1. A belt system provided in a bicycle continuously variable transmission, the belt system comprising:

   a driving pulley and a driven pulley each including a pair of sheaves capable of moving close to and away from each other in a rotation axis direction; and
   a V-belt wound around the driving pulley and the driven pulley, wherein
   an LT coefficient of the V-belt with respect to the driving pulley is in a range of 8 to 12 under a usage condition in which a maximum torque is obtained in a state of being shifted to a lowest speed side, and
   the V-belt has a belt lateral rigidity in a range of 1500 N/mm to 2500 N/mm in a ride-out change measurement test.

2. The belt system provided in a bicycle continuously variable transmission according to claim 1, wherein

   the driving pulley has a minimum pitch diameter in a range of 40 mm to 45 mm, and
   the V-belt has a belt thickness in a range of 7 mm to 8 mm.

3. The belt system provided in a bicycle continuously variable transmission according to claim 1 or 2, wherein
   the belt system is mounted on a continuously variable transmission connected to an auxiliary power source of a bicycle with the auxiliary power source.

*FIG. 1*

(a)

(b)

FIG. 2

FIG. 3

EP 4 516 654 A1

*FIG. 4*

PITCH LINE

# FIG. 5

DRIVING PULLEY

V-BELT

DRIVEN PULLEY

AXIAL LOAD

# FIG. 6

LASER
DISPLACEMENT
METER

RIDE-OUT (RO)

DRIVING
PULLEY
(V PULLEY)

V-BELT

RIDE-OUT CHANGE AMOUNT

AT TIME OF AXIAL
LOAD OF 200 N

AT TIME OF
CHANGING
AXIAL LOAD

(a)

(b)

## FIG. 7

DRIVING PULLEY

V-BELT

DRIVEN PULLEY

AXIAL LOAD

## FIG. 8

DRIVING PULLEY

V-BELT

DRIVEN PULLEY

AXIAL LOAD

<div align="center">

**INTERNATIONAL SEARCH REPORT**

</div>

| | International application No. |
|---|---|
| | **PCT/JP2023/016186** |

**A. CLASSIFICATION OF SUBJECT MATTER**

*B62M 9/08*(2006.01)i; *F16G 5/06*(2006.01)i; *F16H 9/16*(2006.01)i
FI: B62M9/08 A; F16G5/06 A; F16H9/16

According to International Patent Classification (IPC) or to both national classification and IPC

**B. FIELDS SEARCHED**

Minimum documentation searched (classification system followed by classification symbols)

B62M9/04 - 9/08; F16G5/06; F16H9/00 - 9/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-503923 A (FANECO, Simon James) 14 February 2019 (2019-02-14) entire text, all drawings | 1-3 |
| A | Microfilm of the specification and drawings annexed to the request of Japanese Utility Model Application No. 119994/1989 (Laid-open No. 59292/1991) (KAWANA, Hideo) 11 June 1991 (1991-06-11), entire text, all drawings | 1-3 |
| A | JP 6-341492 A (MITSUBOSHI BELTING LTD.) 13 December 1994 (1994-12-13) entire text, all drawings | 1-3 |
| A | JP 2003-13743 A (MITSUBOSHI BELTING LTD.) 15 January 2003 (2003-01-15) entire text, all drawings | 1-3 |
| A | JP 2010-167976 A (MITSUBOSHI BELTING LTD.) 05 August 2010 (2010-08-05) entire text, all drawings | 1-3 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 May 2023** | **27 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/016186**

| Patent document cited in search report | | | Publication date (day/month/year) | Patent family member(s) | | | Publication date (day/month/year) |
|---|---|---|---|---|---|---|---|
| JP | 2019-503923 | A | 14 February 2019 | US | 2018/0370595 | A1 | |
| | | | | WO | 2017/103110 | A1 | |
| | | | | EP | 3181438 | A1 | |
| | | | | TW | 201726483 | A | |
| | | | | AU | 2016369409 | A1 | |
| JP | 3-59292 | U1 | 11 June 1991 | (Family: none) | | | |
| JP | 6-341492 | A | 13 December 1994 | (Family: none) | | | |
| JP | 2003-13743 | A | 15 January 2003 | (Family: none) | | | |
| JP | 2010-167976 | A | 05 August 2010 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05278668 A
- JP 2019503923 A
- JP 2022073123 A
- JP 2023065626 A